# EUROPÄISCHE PATENTSCHRIFT

(11) **EP 3 494 328 B1**
(45) Veröffentlichungstag und Bekanntmachung des Hinweises auf die Patenterteilung: **19.05.2021**
(21) Anmeldenummer: 17745735.5
(22) Anmeldetag: 31.07.2017
(51) Int. Cl.: F16H 61/12, F16H 61/688, F16H 61/00

(54) **HYDRAULIKSYSTEM FÜR EIN AUTOMATIKGETRIEBE EINES KRAFTFAHRZEUGS**
HYDRAULIC SYSTEM FOR AN AUTOMATIC TRANSMISSION OF A MOTOR VEHICLE
SYSTÈME HYDRAULIQUE POUR UNE TRANSMISSION AUTOMATIQUE D'UN VÉHICULE À MOTEUR

(30) Priorität: 03.08.2016 DE 102016214364
(43) Veröffentlichungstag der Anmeldung: 12.06.2019
(73) Patentinhaber: Audi AG, 85045 Ingolstadt (DE)
(72) Erfinder: WEINHARDT, Mathias, 85051 Ingolstadt (DE)
(86) Internationale Anmeldenummer: PCT/EP2017/069338
(87) Internationale Veröffentlichungsnummer: WO 2018/024682

(56) Entgegenhaltungen:
- EP-A1- 1 860 349
- EP-A1- 2 918 874
- DE-A1-102013 003 894
- DE-B3-102013 008 701
- JP-A- 2000 205 141

## Beschreibung

Die Erfindung betrifft ein Hydrauliksystem für ein Automatikgetriebe, insbesondere Doppelkupplungsgetriebe, eines Kraftfahrzeugs nach dem Patentanspruch 1.

Bei einem Doppelkupplungsgetriebe ist mittels zweier Teilgetriebe ein vollautomatischer Gangwechsel ohne Zugkraftunterbrechung ermöglicht. Die Übertragung des Moments erfolgt über eine von zwei Kupplungen, die die zwei Teilgetriebe mit dem Antrieb verbindet. Die Kupplungen sowie die Gangsteller zum Einlegen der Gänge werden über Hydraulikzylinder betätigt, die hydraulisch über ein Hydrauliksystem ansteuerbar sind.

Aus der DE 10 2014 003 083 A1 ist ein Hydrauliksystem bekannt, das einen Druckspeicher zur Bereitstellung eines Speicherdruckes im Hydrauliksystem aufweist. In einem, vom Druckspeicher zum Kupplungs-Hydraulikzylinder führenden Kupplungspfad ist ein von einer elektronischen Steuereinheit ansteuerbares Steuerventil angeordnet, mit dem der am Kupplungs-Hydraulikzylinder anliegende Hydraulikdruck einstellbar ist. Der Steuereinheit ist bevorzugt ein Drucksensor zugeordnet (DE 10 2013 003 894 A1), mit dem der am Kupplungs-Hydraulikzylinder anliegende Hydraulikdruck erfassbar ist. Zudem weist das Hydrauliksystem eine Lade-Hydraulikpumpe auf, die in einem Ladevorgang Hydraulikflüssigkeit in das Hydrauliksystem fördert, um den Speicherdruck zu erhöhen.

Wie oben erwähnt, steuert die elektronische Steuereinheit des Hydrauliksystems bei Erkennen eines Druckspeicher-Ladebedarfs die

Hydraulikpumpe mit einer Lade-Drehzahl an, um den Speicherdruck im Hydrauliksystem zu erhöhen, das heißt aufzuladen. Die Hydraulikpumpe kann drehzahlgeregelt sein, das heißt durch Anpassung (Erhöhung oder Reduzierung) der Ist-Stromaufnahme auf eine vorbestimmte Soll-Drehzahl geregelt werden. Hierzu kann der Elektromotor der Hydraulikpumpe eine Drehzahl-Messeinrichtung sowie eine Stromaufnahme-Messeinrichtung aufweisen, die zusammen mit der elektronischen Steuereinheit einen Regelkreis bilden.

Für den Fall, dass der Hydraulikpumpe kein eigener Volumenmesser zugeordnet ist, kann jedoch im Pumpen-Ladebetrieb keine zuverlässige Aussage über den tatsächlich von der Hydraulikpumpe geförderten Ist-Fördervolumenstrom getroffen werden, wodurch bei einer Fehlfunktion der Hydraulikpumpe die Betriebssicherheit des Hydrauliksystems beeinträchtigt ist.

Aus der EP 2 918 874 A1 ist ein gattungsgemäßes Hydrauliksystem für ein Automatikgetriebe bekannt. Aus der JP 200 205141 A ist eine hydraulische Ansteuerung einer Ladeschaufel eines Baggers bekannt. Aus der DE 10 2013 008 701 B3 ist ein Verfahren zum Betreiben einer Getriebeanordnung bekannt.Aus der EP 1 860 349 A1 ist ein Verfahren zum Betreiben einer hydraulischen Servo-Steuerung bekannt.

Die Aufgabe der Erfindung besteht darin, ein Hydrauliksystem bereitzustellen, bei dem mit einem reduzierten sensortechnischen Aufwand die Betriebssicherheit des Hydrauliksystems gewährleistet werden kann.

Die Aufgabe ist durch die Merkmale des Patentanspruches 1 gelöst. Bevorzugte Weiterbildungen der Erfindung sind in den abhängigen Ansprüchen offenbart.

Gemäß dem kennzeichnenden Teil des Patentanspruches 1 weist die Steuereinheit ein Diagnosemodul auf, mit dem ohne zusätzlichen Volumenmesser eine Fördervolumenstrom-Diagnose durchgeführt werden kann. Bei der Fördervolumenstrom-Diagnose wird in einem Diagnosezeitintervall die Hydraulikpumpe in einem Ladebetrieb mit einer Drehzahl angesteuert. Gleichzeitig wird das Steuerventil eines Hydraulik-Stellzylinders im Hydrauliksystem in eine der Durchflussstellungen angesteuert. Eine Auswerteeinheit des Diagnosemoduls ermittelt auf der Grundlage der sich im Ladebetrieb einstellenden Kolbengeschwindigkeit einen Ist-Volumenstrom und vergleicht diesen mit einem Soll-Volumenstrom. Bei signifikanter Abweichung erkennt das Diagnosemodul einen Fehlerfall, der in einem Fördervolumenstrom-Fehlerspeicher hinterlegbar ist.

Das Steuerventil ist zwischen zwei Durchflussstellungen verstellbar, um einen Kolben in gegenläufigen Kolbenhüben über gegenläufige Kolbenstellwege sowie Kolbengeschwindigkeiten im jeweiligen Hydraulik-Stellzylinder zu verstellen. Jeder Kolbenhub ist mit einer Hydraulikflüssigkeits-Entnahme (das heißt Schluckvolumen) aus dem Hydrauliksystem verbunden.

Bei bekannter Innengeometrie des Hydraulik-Stellzylinders kann in einfacher Weise das pro Kolbenhub entnommene Schluckvolumen berechnet werden. Aus der Kolbengeschwindigkeit im jeweiligen Kolbenhub kann somit ein aus dem Hydrauliksystem entnommener Schluckvolumenstrom ermittelt werden, der unter vordefinierten Rahmenbedingungen Rückschlüsse auf den Fördervolumenstrom der Hydraulikpumpe zulässt. Die oben erwähnte Kolbengeschwindigkeit kann sensortechnisch einfach zum Beispiel mittels eines später beschriebenen Positionssensors ermittelt werden, der die Kolbenhübe des Hydraulik-Stellzylinders erfasst.

Die Erfindung beruht auf dem Sachverhalt, dass im Hydrauliksystem sowohl die Gangsteller als auch die Kupplungen Kupplungs- und Gangsteller-Hydraulikzylinder aufweisen, die jeweils über ein zugeordnetes Kupplungsventil oder Gangstellerventil ansteuerbar ist, die als Steuerventil für die Fördervolumenstrom-Diagnose nutzbar sind. In einer einfachen technischen Umsetzung kann der für die Fördervolumenstrom-Diagnose genutzte Hydraulik-Stellzylinder ein Gangsteller-Hydraulikzylinder sein, dem als Steuerventil ein Gangstellerventil vorgelagert ist, mit dem der am Gangsteller-Hydraulikzylinder anliegende Hydraulikdruck einstellbar ist.

Um bei der Ermittlung des Fördervolumenstromes Messungenauigkeiten zu vermeiden, ist es von Relevanz, dass der im Hochdruckkreislauf im Hydraulikpfad vorherrschende Speicherdruck konstant gehalten wird. Auf diese Weise wird gewährleistet, dass während der Diagnose die Pumpen-Förderleistung nicht für einen zusätzlichen Druck-Aufbau des Speicherdruckes im Hochdruckkreislauf aufgebraucht wird. Messtechnisch besonders vorteilhaft ist es, wenn der Speicherdruck während des Diagnosezeitintervalls bei einem Umgebungsdruck liegt, das heißt der Hochdruckkreislauf drucklos geschaltet ist. Sensortechnisch günstig ist es, wenn der im Kupplungspfad angeordnete Drucksensor während der Fördervolumenstrom-Diagnose zur Erfassung des Ist-Speicherdruckes genutzt wird. In diesem Fall überwacht der Drucksensor, dass der Hochdruckkreislauf während des Diagnosezeitintervalls einen konstanten Speicherdruck aufweist bzw. bevorzugt drucklos bleibt.

Um den Speicherdruck im Hochdruckkreislauf in einfacher Weise auf einen Umgebungsdruck abzusenken, ist es bevorzugt, wenn vor dem Start des Diagnosezeitintervalls der Druckspeicher komplett entleert wird. Die Reduzierung des Ist-Speicherdruckes auf den Umgebungsdruck kann bevorzugt in einem Druckreduzier-Zeitintervall erfolgen, dass dem eigentlichen Diagnosezeitintervall zeitlich vorgelagert ist. In dem Druckreduzier-Zeitintervall ist die Hydraulikpumpe deaktiviert. Gleichzeitig wird der Hydraulik-Stellzylinder (das heißt der Gangsteller-Hydraulikzylinder) so lange durch Ansteuerung seines Steuerventils betätigt, bis aufgrund von leckagebedingter Hydraulikflüssigkeits-Entnahme sowie aufgrund von betätigungsbedingter Hydraulikflüssigkeits-Entnahme der Umgebungsdruck im Hydrauliksystem erreicht ist.

Das Vorliegen von Umgebungsdruck im Hochdruckkreis kann in betriebssicherer Weise mit Hilfe des Positionssensors ermittelt werden. Für den Fall, dass der Positionssensor trotz entsprechender (pulsierender) Ansteuerung des Steuerventils keinen Kolbenhubweg mehr detektiert, erkennt die Steuereinheit, dass im Hochdruckkreislauf ein Umgebungsdruck vorliegt.

Um während des Diagnosezeitintervalls ein möglichst genaues Messergebnis zu erhalten, ist es bevorzugt, wenn die Kolbengeschwindigkeiten einer Vielzahl von Kolbenhüben erfasst werden, und zwar bevorzugt bei unterschiedlichen Prüf-Drehzahlen der Hydraulikpumpe. Die Auswerteeinheit kann aus der Vielzahl von erfassten Daten einen Kolbengeschwindigkeits-Mittelwert bilden, aus dem sich der Ist-Fördervolumenstrom der Hydraulikpumpe berechnen lässt.

Die Erfindung und ihre vorteilhaften Aus- und Weiterbildungen sowie deren Vorteile werden nachfolgend anhand von Zeichnungen näher erläutert.

Es zeigen:
- Figur 1: ein Blockschaltdiagramm eines Doppelkupplungsgetriebes für ein Kraftfahrzeug mit sieben Vorwärtsgängen sowie einem Rückwärtsgang;
- Figur 2a und 2b: ein Hydrauliksystem eines Doppelkupplungsgetriebes in einem Blockschaltbild sowie grob schematisch den Aufbau eines Druckspeichers;
- Figur 3: in einem Blockschaltbild die Programmbausteine zur Druckspeicher- und Kupplungspfad-Diagnose in einem Diagnosemodul; und
- Figur 4: Diagramme, die die Druckspeicher- und Kupplungspfad-Diagnose veranschaulichen;
- Figur 5: in einem Blockschaltbild die zur Gangstellerpfad-Diagnose erforderlichen Programmbausteine in dem Diagnosemodul;
- Figur 6: Diagramme, die die Gangstellerpfad-Diagnose veranschaulichen;
- Figur 7: in einem Blockschaltbild die zur Speichervolumen-Diagnose erforderlichen Programmbausteine in dem Diagnosemodul;
- Figur 8: Diagramme, die die Speichervolumen-Diagnose veranschaulichen;
- Figur 9: in einem Blockschaltdiagramm die zur Umschaltzeitpunkt-Diagnose erforderlichen Programmbausteine in dem Diagnosemodul;
- Figur 10: in einem Blockschaltbild die zur Ventilspreizung-Diagnose erforderlichen Programmbausteine in dem Diagnosemodul;
- Figur 11: Diagramme, die die zeitlichen Verläufe während der Umschaltzeitpunkt-Diagnose und während der Ventilspreizung-Diagnose veranschaulichen;
- Figur 12: in einem Blockschaltdiagramm die zur Sicherheitsventil-Diagnose erforderlichen Programmbausteine in dem Diagnosemodul;
- Figur 13: Diagramme, die die zeitlichen Verläufe relevanter Parameter während der Sicherheitsventil-Diagnose veranschaulichen;
- Figur 14: in einem Blockschaltdiagramm die zur Fördervolumenstrom-Diagnose erforderlichen Programmbausteine in dem Diagnosemodul;
- Figur 15: Diagramme, die die zeitlichen Verläufe während der Fördervolumenstrom-Diagnose veranschaulichen; und
- Figur 16: eine Analyseeinheit, in die die in den Fehlerspeichern generierten Fehlersignale auslesbar sind.

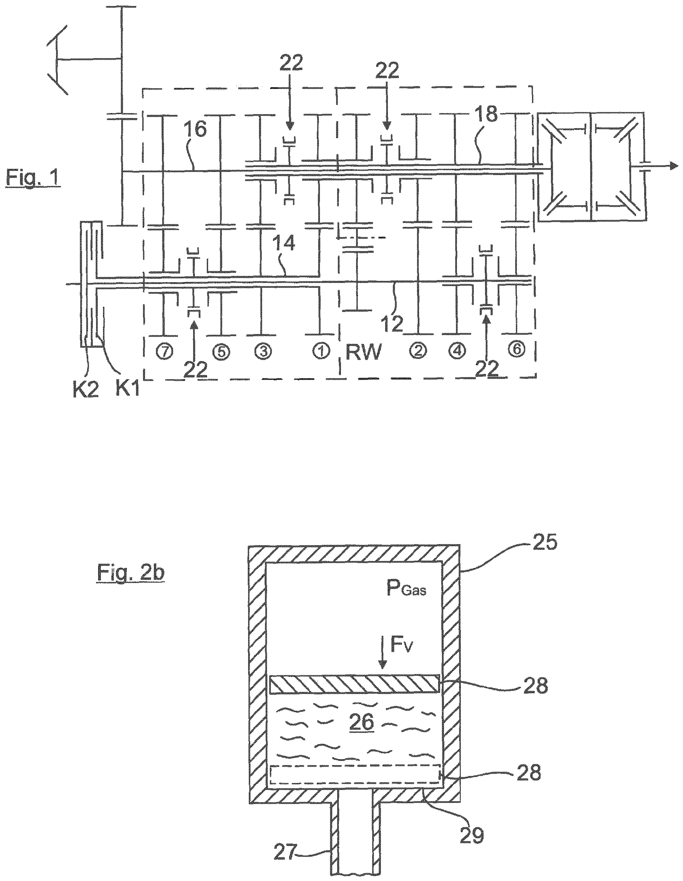

In der Fig. 1 ist in einer Prinzipdarstellung ein Doppelkupplungsgetriebe für ein Kraftfahrzeug mit Allradantrieb gezeigt. Das Doppelkupplungsgetriebe weist sieben Vorwärtsgänge (siehe die eingekreisten Ziffern 1 bis 7) sowie einen Rückwärtsgang RW auf. Das Doppelkupplungsgetriebe ist nachfolgend nur insoweit beschrieben, als es für das Verständnis der Erfindung erforderlich ist. So weist das Doppelkupplungsgetriebe zwei Eingangswellen 12, 14 auf, die koaxial zueinander angeordnet sind und über zwei hydraulisch betätigbare Lamellenkupplungen K1, K2 alternierend mit der Antriebsquelle, zum Beispiel eine Brennkraftmaschine, verbindbar sind. Die Eingangswelle 14 ist als eine Hohlwelle ausgeführt, in der die als Vollwelle ausgebildete Eingangswelle 12 geführt ist. Die beiden Eingangswellen 12, 14 treiben über Zahnradsätze der Vorwärtsgänge sowie des Rückwärtsganges auf eine achsparallel angeordnete Abtriebswelle 16 und eine als Hohlwelle gebildete Zwischenwelle 18 ab. Die Zahnradsätze der Vorwärtsgänge 1 bis 7 weisen jeweils Festzahnräder und über hydraulisch betätigbare Gangsteller schaltbare Loszahnräder auf. Die Gangsteller können beispielhaft Doppelsynchronkupplungen sein, die jeweils aus einer Neutralstellung heraus zwei benachbarte Loszahnräder schalten können.

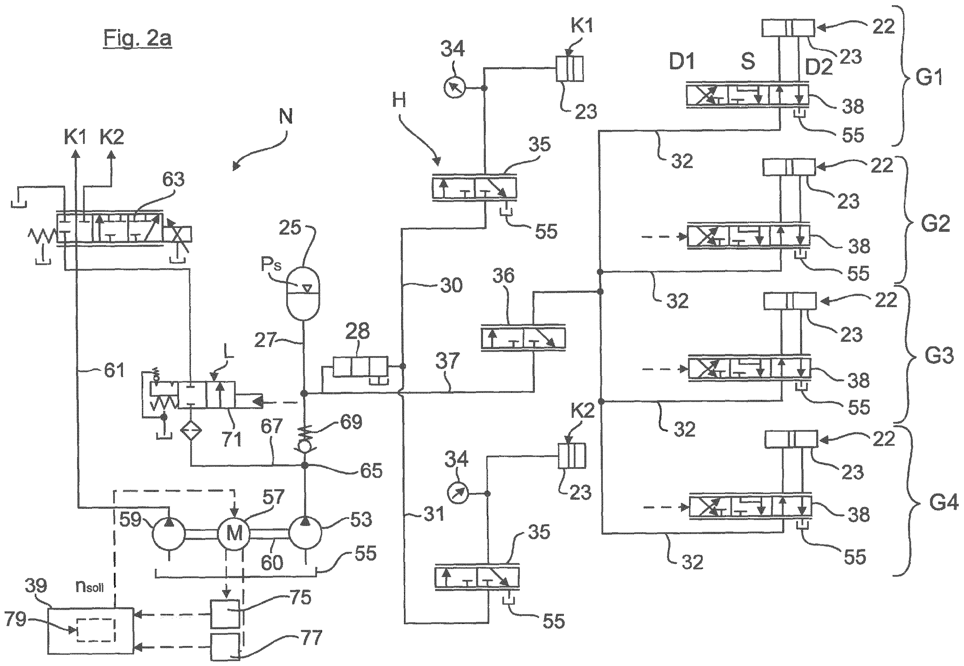

In der Fig. 2a ist das Hydrauliksystem des Doppelkupplungsgetriebes in einem stark vereinfachten Blockschaltbild dargestellt. Mit Hilfe des Hydrauliksystems werden die Hydraulikzylinder 23 der Kupplungen K1, K2 sowie die Hydraulikzylinder 22 der Gangsteller betätigt. Das Hydrauliksystem weist gemäß der Fig. 2a einen Hochdruckkreislauf H sowie einen Niederdruckkreislauf N auf. In dem Hochdruckkreislauf H können die darin geschalteten Hydraulikzylinder 22, 23 der Kupplungen K1, K2 sowie der Gangsteller über einen Druckspeicher 25 mit einem Speicherdruck ps beaufschlagt werden, der in einer Größenordnung von zum Beispiel 30 bar liegen kann. Hierzu ist eine am Druckspeicher 25 angeschlossene Hauptleitung 27 über Kupplungspfade 30, 31 zu den Kupplungs-Hydraulikzylindern 23 geführt und über Gangstellerpfade 32 zu den Gangsteller-Hydraulikzylindern 22 geführt. In den Gangsteller- und Kupplungspfaden 30, 31, 32 sind jeweils Kupplung- oder Gangstellerventile 35, 38 angeordnet. Die Kupplung- oder Gangstellerventile 35, 38 sind in nicht dargestellter Weise über eine zentrale Steuereinheit 39 ansteuerbar. Zudem ist die Steuereinheit 39 mit Drucksensoren 34 signaltechnisch in Verbindung. Die Drucksensoren 34 erfassen jeweils den an der ersten Kupplung K1 und an der zweiten Kupplung K2 anliegenden Hydraulikdruck.

Das Hydrauliksystem weist zudem eine Ladepumpe 53 auf, die eingangsseitig mit einem Ölsumpf 55 verbunden ist. Die Ladepumpe 53 ist zum Aufladen des Druckspeichers 25 über einen Elektromotor 57 von der Steuereinheit 39 ansteuerbar. Zudem ist die Ladepumpe 53 zusammen mit einer Kühlpumpe 59 auf einer gemeinsamen Antriebswelle 60 angeordnet, die vom Elektromotor 57 angetrieben wird. Die Kühlpumpe 59 ist ausgangsseitig mit einer Niederdruckleitung 61 in Verbindung, die zu einem Verteilerventil 63 führt. In Abhängigkeit von der Stellung des Verteilerventiles 63 kann bei Vorliegen von Kühlbedarf die Hydraulikflüssigkeit zur ersten und/oder zweiten Kupplung K1, K2 und anschließend in den Ölsumpf 55 rückgeführt werden.

In der Fig. 2a zweigt die Hauptleitung 27 des Hochdruckkreislaufes H an einer Verzweigungsstelle 65 in eine Bypassleitung 67 ab, die mit der Niederdruckleitung 61 des Niederdruckkreislaufes N verbunden ist. Stromab der Verzweigungsstelle 65 ist ein später beschriebenes Rückschlagventil 69 angeordnet. Zudem ist in der Bypassleitung 67 ein Speicherladeventil 71 integriert. Das Speicherladeventil 71 kann in Abhängigkeit von Höhe des Speicherdruckes ps im Hochdruckkreislauf H zwischen in der Fig. 2a gezeigten Ladestellung L und einer Kühlstellung K verstellt werden.

Der Speicherdruck ps im Hochdruckkreislauf H wirkt als ein Steuerdruck, mit dem das Speicherladeventil 71 ohne zusätzliche Fremdenergie, das heißt selbsttätig, verstellbar ist. Das Speicherladeventil 71 ist dabei so ausgelegt, dass es sich in die Ladestellung L verstellt, sofern der Speicherdruck ps im Hochdruckkreislauf H zum Beispiel einen unteren Schwellwert, zum Beispiel 25 bar, unterschreitet. Außerdem wird das Speicherladeventil 71 selbsttätig in seine Kühlstellung K verschoben, sofern der Speicherdruck ps einen oberen Schwellwert pₘₐₓ, zum Beispiel 28 bar, überschreitet.

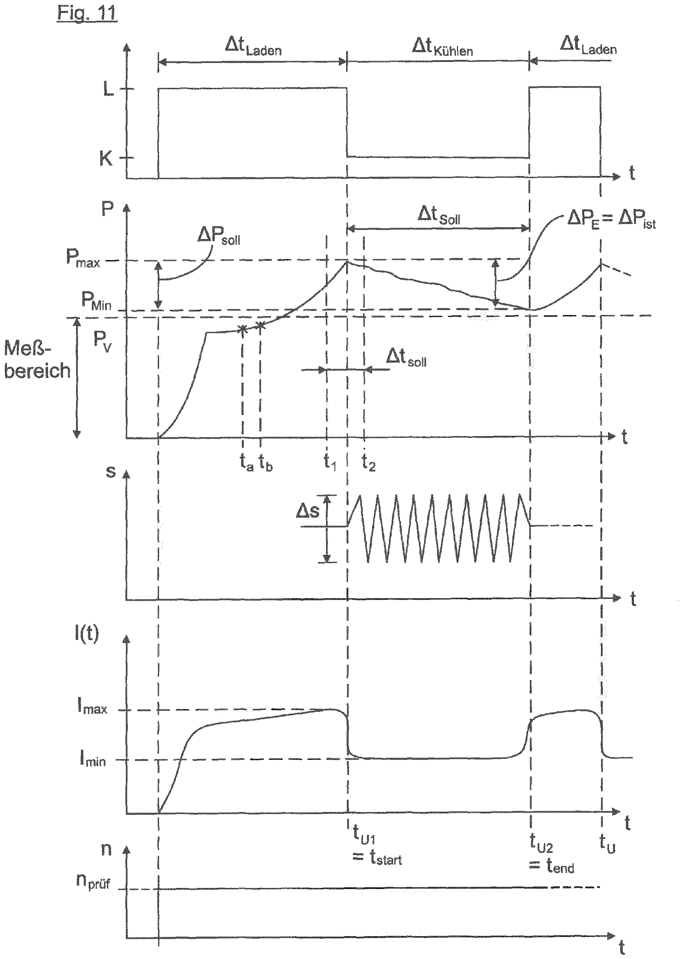

Im Fahrbetrieb kommt es durch Betätigungen der Kupplungen K1, K2 sowie der Gangsteller G1 bis G4 zu Druckverlusten. Zudem ergeben sich weitere Druckverluste durch eine Basisleckage, das heißt aufgrund von Ventilspalten oder dergleichen, im Hochdruckkreislauf H. Dadurch wird der Speicherdruck ps während des Fahrbetriebes reduziert. Für den Fall, dass der Speicherdruck ps den unteren Schwellwert pₘᵢₙ unterschreitet (das heißt es liegt ein Druckspeicher-Ladebedarf vor), verstellt sich das Speicherladeventil 71 selbsttätig in seine Ladestellung L (Fig. 2a). Bei Erkennen des Druckspeicher-Ladebedarfs steuert die Steuereinheit 39 den Elektromotor 57 mit einer Lade-Solldrehzahl an. Dadurch kann die Lade-Hydraulikpumpe 53 den Druckspeicher 25 aufladen. In einem solchen Ladebetrieb arbeitet die Lade-Hydraulikpumpe 53 unter großer Pumpenlast und daher mit entsprechend großer Ist-Stromaufnahme Iₘₐₓ (Fig. 11). Überschreitet der Speicherdruck ps den oberen Schwellwert pₘₐₓ (Fig. 11), das heißt es liegt kein Druckspeicher-Ladebedarf mehr vor, so stellt sich das Speicherladeventil 71 selbsttätig in seine Kühlstellung K. In der Kühlstellung K fördert die Lade-Hydraulikpumpe 53 über die nunmehr geöffnete Bypassleitung 67 Hydrauliköl in den Niederdruckkreislauf N. Gleichzeitig ist der Hochdruckkreislauf H über das Rückschlagventil 69 druckdicht geschlossen. Entsprechend arbeitet die Lade-Hydraulikpumpe 53 nicht mehr mit hoher, sondern mit einer reduzierten Pumpenlast sowie entsprechend geringer Ist-Stromaufnahme Iₘᵢₙ (Fig. 11).

Wie oben erwähnt, steuert die Steuereinheit 39 bei Erkennen eines Druckspeicher-Ladebedarfs den Elektromotor 57 mit einer Lade-Solldrehzahl an. Zum Erkennen eines solchen Druckspeicher-Ladebedarfs ist erfindungsgemäß auf einen Drucksensor im Hochdruckkreislauf H oder einem Lagesensor im Speicherladeventil 71 verzichtet. Anstelle dessen weist die Steuereinheit 39 eine Auswerteeinheit auf. Die Auswerteeinheit ist signaltechnisch in Verbindung mit einer in der Motoransteuerung integrierten Strommesseinrichtung 75, die eine Ist-Stromaufnahme Iᵢₛₜ des Elektromotors 57 erfasst, und mit einem Drehzahlsensor 77, der eine Ist-Drehzahl nᵢₛₜ des Elektromotors 57 erfasst.

In der Fig. 2b ist der grundsätzliche Aufbau sowie die Funktionsweise des Druckspeichers 25 ersichtlich. Demzufolge ist der Druckspeicher 25 eine Kolben-Zylinder-Einheit mit einer, mit den Hydraulikleitungen 27, 31, 32 verbundenen Ölkammer 26 und einem vorgespannten Druckkolben 28. Die Vorspannung wird hier beispielhaft durch einen Gasdruck erzielt, der am Druckkolben 28 anliegt. Alternativ kann die Vorspannung auch durch eine Feder erzielt werden. Bei vollständig entleerter Ölkammer 26 wird der Druckkolben 28 (in der Fig. 2b in gestrichelter Linie angedeutet) mit einer Vorspannkraft Fv gegen einen Anschlag 29 des Druckspeichers 25 gedrückt. Das heißt, dass bei einem Befüllvorgang zur Überwindung der Vorspannkraft Fv ein Hydraulikdruck anliegt, der größer ist als ein, mit der Vorspannkraft Fv korrelierender Vorspanndruck pᵥ.

In der Fig. 2b ist der Druckspeicher 25 in einem teilbefüllten Zustand gezeigt, bei dem das Hydrauliköl unter Aufbau der Vorspannkraft Fv mit einem Speicherdruck am Druckkolben 28 anliegt. Im vollkommen entleerten Zustand werden die Hydraulikleitungen 27, 31 nicht mittels des Druckspeichers 25 druckbeaufschlagt. Vielmehr herrscht in den Hydraulikleitungen 27, 31, 32 Umgebungsdruck pu vor. Eine Betriebsbereitschaft des Automatikgetriebes ist dann gegeben, wenn sämtliche Hydraulikleitungen 27, 31, 32 mit Hydrauliköl gefüllt sind und in den Hydraulikleitungen 27, 31, 32 ein Hydraulikdruck anliegt, der größer als der Vorspanndruck pv ist, und zwar um einen vorgegebenen Druckoffset, damit die Betriebsbereitschaft nicht sofort nach Abschaltung der Ladepumpe 53 aufgrund einer Basisleckage wieder verloren geht.

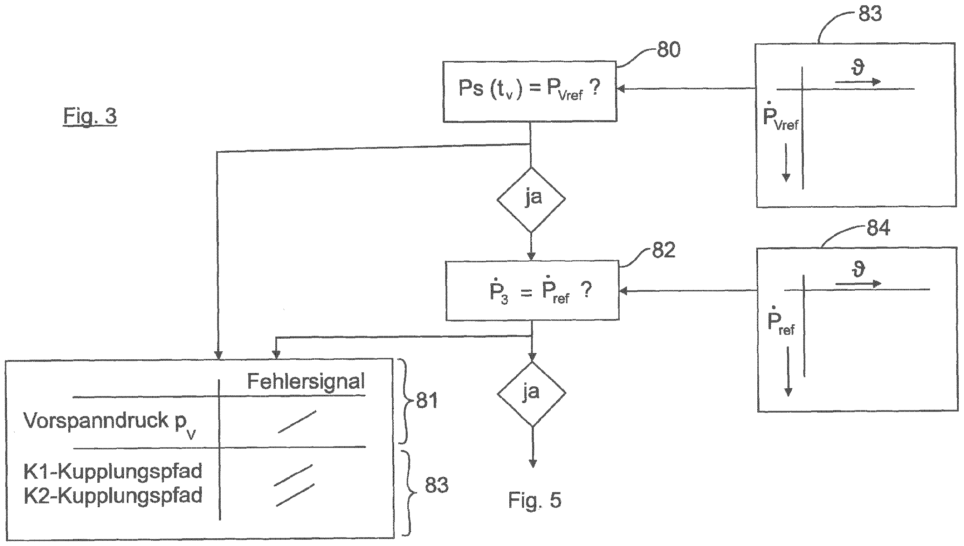

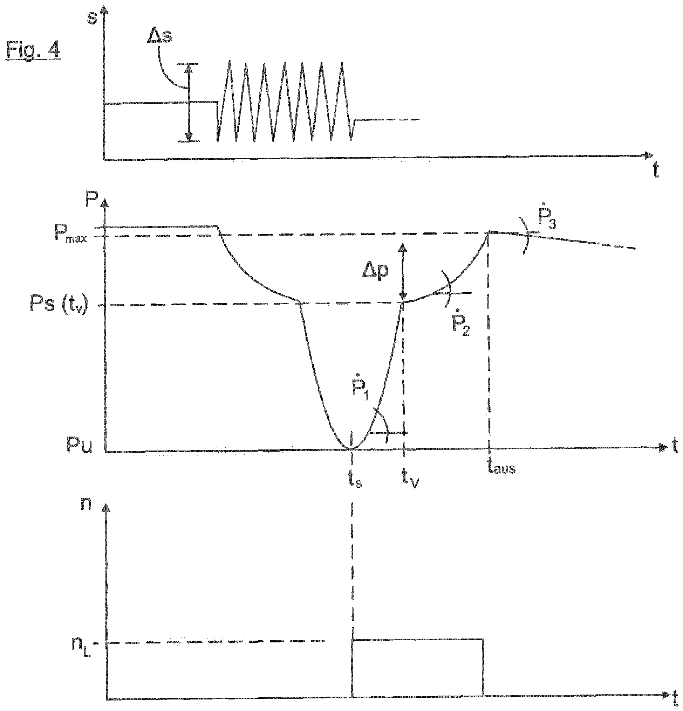

In der Figur 2a weist die Steuereinheit 39 ein Diagnosemodul 79 auf, mit dem das Ladeverhalten prüfbar ist, und zwar insbesondere der Sachverhalt prüfbar ist, ob der tatsächliche Vorspanndruck pv im Druckspeicher 25 mit einem in der Spezifikation angegebenen (d.h. konstruktiv vorgegebenen) Referenz-Vorspanndruck p_{VRef} übereinstimmt. Die hierzu erforderlichen Programmbausteinen sind in der Fig. 3 skizziert. Demnach weist das Diagnosemodul 79 eine Auswerteeinheit 80 auf, mit der ein in einem Kennfeld 83 hinterlegter temperaturabhängiger Vorspanndruck p_{VRef} mit einem später beschriebenen Ist-Speicherdruck ps(tv) (Fig. 4) verglichen wird. Der Ist-Speicherdruck ps(tv) wird zu einem später beschriebenen Vorspanndruck-Zeitpunkt tv vom Drucksensor 34 erfasst. Während des Diagnosebetriebs ist das Kupplungsventil 35 in einem der Kupplungspfade 30, 31 dauerhaft geöffnet, während das Kupplungsventil 35 im anderen Kupplungspfad geschlossen ist.

Bei einer einwandfreien Druckspeicher-Funktion stimmt der im Vorspanndruck-Zeitpunkt tv erfasste Ist-Speicherdruck p_{S}(t_{V}) mit dem Referenz-Vorspanndruck p_{VRef} überein. Bei einer signifikanten Vorspanndruck-Abweichung stellt dagegen die Auswerteeinheit 80 einen Vorspanndruck-Fehler fest, der in einem Vorspanndruck-Fehlerspeicher 81 (Fig. 3) hinterlegt wird. Sofern festgestellt ist, dass der Druckspeicher 25 in Ordnung ist, wird mittels einer weiteren Auswerteeinheit 82 (Fig. 3) des Diagnosemoduls 79 eine später beschriebene Kupplungspfad-Diagnose durchgeführt.

Nachfolgend wird die Druckspeicher-Diagnose (d.h. Vorspanndruck-Diagnose) und die Kupplungspfad-Diagnose anhand der Fig. 3 und 4 erläutert: So wird zur Vorbereitung der Druckspeicher-Diagnose die Ölkammer 26 des Druckspeichers 25 vollständig entleert und der Ist-Speicherdruck ps(t) im Hydrauliksystem auf einen Umgebungsdruck pu reduziert, so dass zu einem Diagnose-Startzeitpunkt ts (Fig. 4) die Druckspeicher-Diagnose beginnen kann. Die vorbeschriebene Diagnosestart-Bedingung wird durch eine Betätigung der Hydraulikzylinder 22, 23 der Kupplungen K1, K2 und der Gangsteller G1 bis G4 erzielt, wie es in dem oberen Stellweg-Diagramm der Fig. 4 angedeutet ist. Demzufolge werden die Hydraulikzylinder 22, 23 durch eine Bestromung der jeweiligen Kupplungs- oder Gangstellerventile 35, 38 solange intermittierend angesteuert, bis aufgrund der mit der Hydraulikzylinder-Betätigung verbundenen Hydraulikflüssigkeits-Entnahme der vom Drucksensor 34 erfasste Speicherdruck ps auf den Umgebungsdruck pu reduziert ist. Das Vorliegen eines solchen Umgebungsdruckes pu kann durch den Drucksensor 34 erfasst werden. Alternativ dazu kann durch Positionssensoren 93 in den Hydraulikzylindern 22, 23 ermittelt werden, ob der jeweilige Hydraulikzylinder 22, 23 noch eine Stellweg s (Fig. 4) zurücklegt oder nicht. Falls nicht, wird daraus gefolgert, dass im Hydrauliksystem ein Umgebungsdruck pu vorliegt.

Anschließend startet zum Zeitpunkt ts (Fig. 4) der Diagnose-Ladebetrieb, bei dem die Hydraulik-Ladepumpe 53 mit einer konstanten Lade-Drehzahl n_{L} (Fig. 4, unteres Diagramm) angesteuert wird. Exemplarisch wird zunächst mittels des im ersten Kupplungspfad 31 angeordneten Drucksensors 34 der Ist-Speicherdruckverlauf ps(t) erfasst, wie er in der Fig. 4, mittleres Diagramm wiedergegeben ist. Demzufolge erhöht sich der Speicherdruck ps bis zu dem Vorspanndruck-Zeitpunkt tv, bei dem der vom Drucksensor 34 erfasste Ist-Speicherdruck p_{S}(tᵥ) den Druckspeicher-Vorspanndruck pv erreicht hat.

Wie oben bereits angedeutet, ist bei einer fehlerfreien Druckspeicher-Funktion der im Vorspanndruck-Zeitpunkt tv erfasste Ist-Speicherdruck ps(tv) (unter Berücksichtigung von Temperaturabhängigkeiten) identisch mit einem Referenz-Vorspanndruck p_{VRef}. Bei einer signifikanten Abweichung zwischen dem im Vorspanndruck-Zeitpunkt tv erfassten Ist-Speicherdruck p_{S}(t_{V}) und dem Referenz-Vorspanndruck p_{VRef} stellt die Auswerteeinheit 80 einen Vorspanndruck-Fehler fest. Im weiteren Diagnose-Ladebetrieb wird nach dem Vorspanndruck-Zeitpunkt tv die Ölkammer 26 des Druckspeichers 25 gefüllt, und zwar unter Verstellung des Druckkolbens 28.

Wie aus der Fig. 4, mittleres Diagramm, hervorgeht, steigt im Diagnose-Ladebetrieb der Ist-Speicherdruckverlauf p_{S}(t) bis zum Erreichen des Vorspanndrucks pv im Druckspeicher 25 (d.h. bis zum Vorspanndruck-Zeitpunkt tv) mit einem steilen Druckgradienten ṗ₁ an. Im weiteren Verlauf (d.h. nach dem Vorspanndruck-Zeitpunkt tv) steigt der Ist-Speicherdruckverlauf ps(t) dagegen lediglich mit einem flacheren Druckgradienten ṗ₂ an. Diese für den Druckspeicher 25 charakteristische Ladekurve wird zur Ermittlung des Vorspanndruck-Zeitpunkts tv wie folgt genutzt: So erfasst die Auswerteeinheit 80 die Druckgradienten ṗ₁, ṗ₂ des Ist-Speicherdruckverlaufes p_{S}(t). Bei Erfassen einer stufenartigen Gradienten-Änderung zwischen den Druckgradienten ṗ₁ und ṗ₂ erkennt die Auswerteeinheit 80 den Vorspanndruck-Zeitpunkt tv.

Sofern in der obigen Vorspanndruck-Diagnose kein Vorspanndruck-Fehler erkannt wird, erfolgt unmittelbar anschließend die Kupplungspfad-Diagnose: Hierzu wird einfach der während der Druckspeicher-Diagnose erfolgende Diagnose-Ladebetrieb fortgesetzt, bis der Drucksensor 34 einen oberen Schwellwert pₘₐₓ (Fig. 4, mittleres Diagramm) erreicht. Der obere Schwellwert pₘₐₓ liegt in der Fig. 4, mittleres Diagramm, um eine Druckdifferenz Δp über dem Vorspanndruck p_{V} des Druckspeichers 25. Nach dem Ende des Diagnose-Ladebetriebs vergleicht eine zweite Auswerteeinheit 82 einen Druckgradienten ṗ₃ des Ist-Speicherdruckverlauf p_{S}(t) mit einem Referenz-Druckgradienten ṗ_{Ref}, der temperaturabhängig in einem Kennfeld 84 (Fig. 3) im Diagnosemodul 79 hinterlegt ist. Die Auswerteeinheit 82 ermittelt aus dem Vergleich, ob ein fehlerfreier oder fehlerbehafteter leckagebedingter Druckabfall im Ist-Speicherdruckverlauf p_{S}(t) vorliegt.

Es ist hervorzuheben, dass die Kupplungspfad-Diagnose nur unter der Bedingung erfolgt, dass die Auswerteeinheit 80 keinen Vorspanndruck-Fehler feststellt. Bei Fehlerfreiheit im Druckspeicher 25 können fehlerhafte Leckagen eindeutig dem Kupplungspfad 31 zugewiesen werden. Sowohl bei der Druckspeicher-Diagnose als auch bei der Kupplungspfad-Diagnose ist das in der Verbindungsleitung 37, die die Hauptleitung 27 mit den Gangstellerpfaden 32 verbindet, angeordnete Druckregelventil 36 geschlossen.

Zur Plausibilisierung des in der Vorspanndruck-/Kupplungspfad-Diagnose erzielten Ergebnisses kann der oben anhand des ersten Kupplungspfads 31 dargelegte Diagnosebetrieb doppelt durchgeführt werden, und zwar im Rahmen einer ersten Teildiagnose A mit Hilfe des im ersten Kupplungspfad 31 angeordneten Drucksensors 34 sowie mit dem im zweiten Kupplungspfad 32 geschlossenen Kupplungsventil 35. Anschließend kann der obige Diagnosebetrieb im Rahmen einer zweiten Teildiagnose B durchgeführt werden, und zwar mit dem im zweiten Kupplungspfad 30 angeordneten Drucksensor 34 und mit dem im ersten Kupplungspfad 31 geschlossenen Kupplungsventil 35.

Das Diagnosemodul 79 kann bei Vorliegen gleicher Fehler sowohl in der ersten Teildiagnose A als auch in der zweiten Teildiagnose B einen Druckspeicher-Fehler erkennen sowie mit großer Wahrscheinlichkeit einen Kupplungspfad-Fehler ausschließen. Bei Vorliegen unterschiedlicher Fehler-Ergebnisse kann das Diagnosemodul 79 einen Leckage-Fehler in einem der beiden Kupplungspfade 30, 31 erkennen.

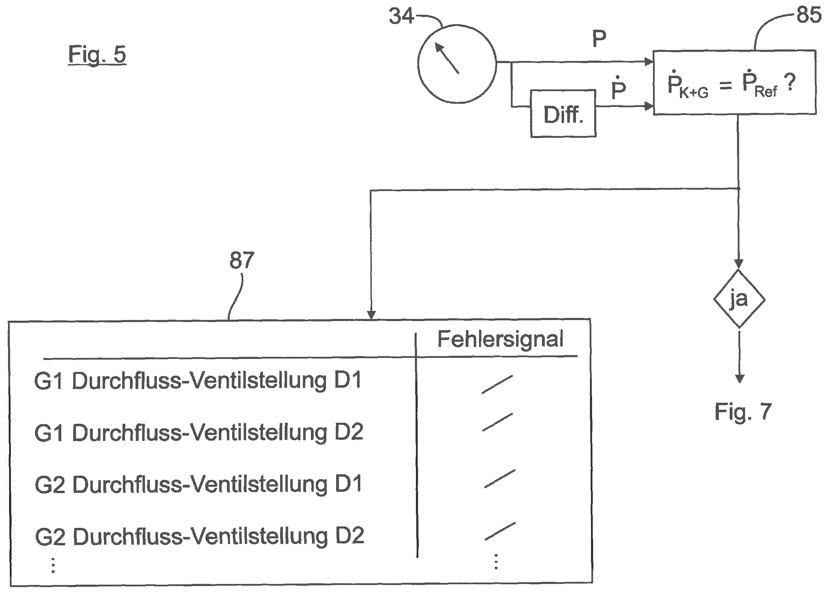

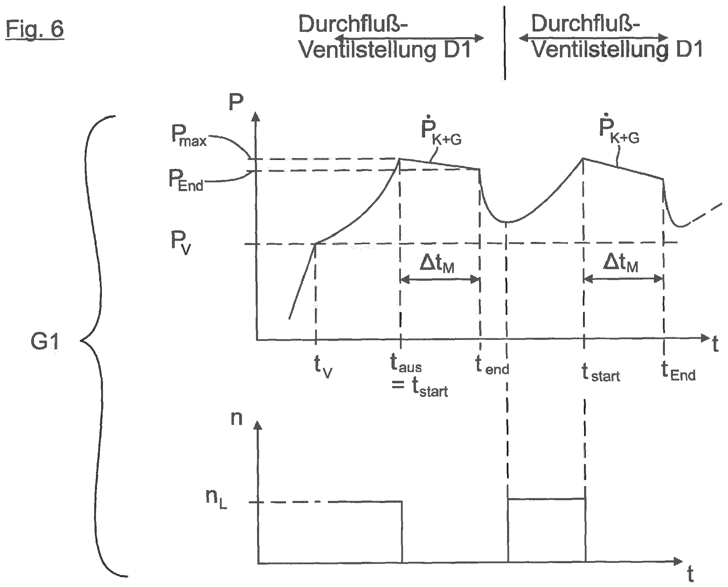

In der Figur 5 sind die für eine Gangstellerpfad-Diagnose erforderlichen Programmbausteine des Diagnosemoduls 79 in einem grob vereinfachten Blockschaltbild gezeigt. Die Gangstellerpfad-Diagnose wird als eine FolgeDiagnose zeitlich unmittelbar nach der Kupplungspfad-Diagnose (Fig. 3) durchgeführt, und zwar unter der Bedingung, dass in der Kupplungspfad-Diagnose zumindest ein Kupplungspfad 30, 31 mit fehlerfreier Leckage erkannt ist. Der Drucksensor 34 des als fehlerfrei eingestuften Kupplungspfades 30, 31 (nachfolgend als Referenz-Kupplungspfad bezeichnet) wird für die anhand der Figuren 5 und 6 veranschaulichte Gangstellerpfad-Diagnose genutzt.

Wie aus der Figur 5 hervorgeht, weist das Diagnosemodul 79 eine dritte Auswerteeinheit 85 auf, an deren Signaleingang ein vom Drucksensor 34 erfasster Ist-Speicherdruck p_{S}(t) und ein Ist-Speicherdruck-Gradient p anliegt. Mittels der Auswerteeinheit 85 wird das Leckage-Verhalten jedes der Gangstellerpfade 32 separat geprüft. Gegebenenfalls erfasste Leckage-Fehler werden in dem Fehlerspeicher 87 hinterlegt.

Nachfolgend wird anhand der Figuren 5 und 6 die Gangstellerpfad-Diagnose beschrieben: So öffnet das Diagnosemodul 79 zunächst das im Referenz-Kupplungspfad 30 angeordnete Kupplungsventil 35, um den Ist-Speicherdruckverlauf p_{S}(t) zu erfassen. Zudem wird das Druckregelventil 36 in der Verbindungsleitung 37 des Hydrauliksystems geöffnet, um zwischen dem im Referenz-Kupplungspfad 30 angeordneten Drucksensor 34 und den Gangstellerpfaden 32 eine Druckverbindung herzustellen. Anschließend erfolgt ein Diagnose-Ladebetrieb durch Aktivierung der Lade-Hydraulikpumpe 53. Im Diagnose-Ladebetrieb wird der Ist-Speicherdruck p_{S}(t) bis auf den oberen Schwellwert pₘₐₓ (Figur 6) zum End-Zeitpunkt tₐᵤₛ erhöht. Nach dem Ende des Diagnose-Ladebetriebs, das heißt zum End-Zeitpunkt tₐᵤₛ (Figur 6), erfasst der Drucksensor 34 während eines Meßzeitintervalls Δt_{M} einen Druckgradienten ṗ_{K+G} des Speicherdruckverlaufes ps(t). Die Auswerteeinheit 85 vergleicht den Druckgradienten ṗ_{K+G} mit einem Referenz-Druckgradienten ṗ_{Ref} und wertet aus, ob ein fehlerfreier oder fehlerbehafteter Druckabfall (das heißt eine Gangsteller-Leckage) im Speicherdruckverlauf p_{S}(t) vorliegt.

Wie in der Figur 2a gezeigt, ist jedes der in den Gangstellerpfaden 32 angeordneten Gangstellerventile 38 zwischen einer Sperr-Ventilstellung S und zwei Durchfluss-Ventilstellungen D1, D2 verstellbar. Die Gangstellerpfad-Diagnose erfolgt im zu prüfenden Gangstellerpfad 32 für jede der Durchfluss-Ventilstellungen D1 und D2 separat. Das heißt, dass in jedem Gangstellerpfad 32 die Gangsteller-Diagnose sowohl in der ersten Durchfluss-Ventilstellung D1 des Gangstellerventils 38 als auch in der zweiten Durchfluss-Ventilstellung D2 des Gangstellerventils 38 durchgeführt wird. Die Gangstellerventile 38 in den verbleibenden Gangstellerpfaden 32 bleiben dagegen in die Sperr-Ventilstellung S geschaltet, um die Meßgenauigkeit bei der Diagnose des zu prüfenden Gangstellerpfads 32zu erhöhen. Der im Meßzeitintervall Δt_{M} vom Drucksensor 34 erfasste Druckgradient ṗ_{K+G} gibt daher den gemeinsamen Druckabbau sowohl im Referenz-Kupplungspfad 30 als auch im zu prüfenden Gangstellerpfad 32 wieder, dessen Gangstellerventil 38 in eine der beiden Durchflußstellungen D1, D2 geschaltet ist.

Der Referenz-Druckgradient ṗ_{Ref} wird aus einer Kennfeld-Datenbank gelesen, z.B. aus der bereits in der Figur 3 gezeigten Kennfeld-Datenbank 83. In diesem Fall würde der auslesbare Referenz-Druckgradient ṗ_{Ref} einer fehlerfreien Basisleckage des Referenz-Kupplungspfades 30 entsprechen. In der Auswerteeinheit 85 werden nicht nur die Druckgradienten ṗ_{K+G} erfasst, sondern zusätzlich auch Absolut-Druckwerte, das heißt der Ist-Speicherdruck ps(tstart) zum Startzeitpunkt tstart als auch der Ist-Speicherdruck p_{S}(t_{End}) zum Mess-Endzeitpunkt t_{End} des Messzeitintervalls Δt_{M}. In diesem Fall erkennt die Auswerteeinheit 85 einen fehlerfreien Gangstellerpfad 32, wenn die Bedingungen erfüllt sind, dass erstens eine ausreichend große Speicherdruckdifferenz zwischen dem Start- und Endzeitpunkt t_{Start}, t_{End} vorliegt und dass zweitens der Druckgradient ṗ_{K+G} dem Referenz-Druckgradienten ṗ_{Ref} entspricht.

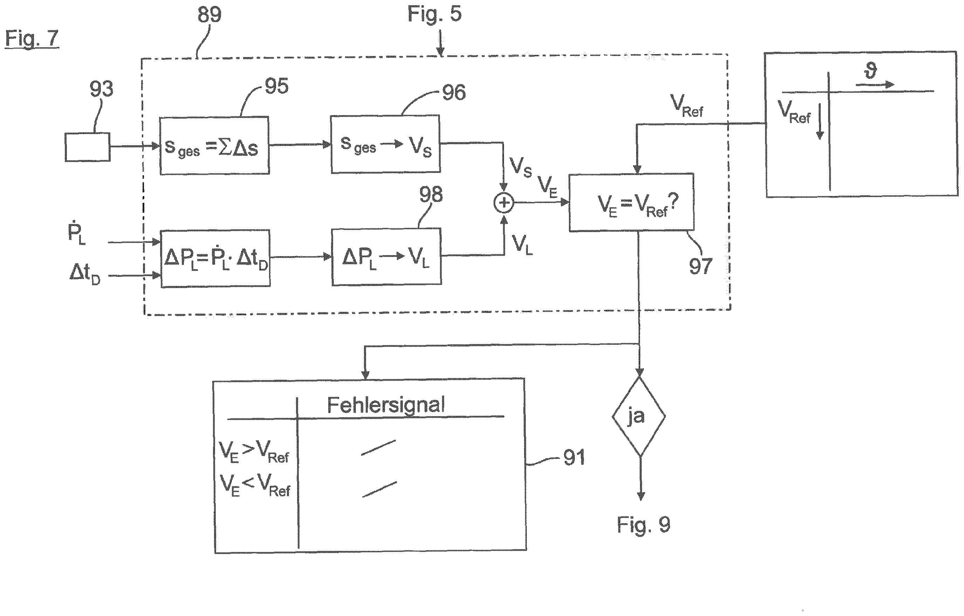

In der Figur 7 sind die für eine Speichervolumen-Diagnose erforderlichen Programmbausteine des Diagnosemoduls 79 in einem grob vereinfachten Blockschaltbild gezeigt. Die Speichervolumen-Diagnose wird als eine FolgeDiagnose zeitlich unmittelbar nach der Gangsteller-Diagnose (Figuren 5 und 6) durchgeführt, und zwar unter der Bedingung, dass in der Gangsteller-Diagnose zumindest ein Gangstellerpfad 32 der Gangsteller G1 bis G4 als fehlerfrei erkannt ist und somit für die Speichervolumen-Diagnose als ein Referenz-Gangstellerpfad nutzbar ist.

Wie aus der Figur 7 hervorgeht, weist das Diagnosemodul 79 eine Auswerteeinheit 89 auf, die in einem Vergleicher-Baustein 97 eine bei der Speichervolumen-Diagnose ermittelte Hydraulikflüssigkeits-Entnahme V_{E} mit einem Referenz-Speichervolumen V_{ref} vergleicht. Bei Vorliegen einer signifikanten Abweichung wird ein Speichervolumen-Fehler erkannt und im Fehlerspeicher 91 abgespeichert. Das Referenz-Speichervolumen V_{ref} ist aus einem Speichervolumen-Kennfeld einer Datenbank auslesbar, in dem die Referenzwerte temperaturabhängig hinterlegt sind.

Wie aus der Figur 7 weiter hervorgeht, ist die Auswerteeinheit 89 in Signalverbindung mit einem Positionssensor 93 des im Referenz-Gangstellerpfad 32 angeordneten Gangsteller-Hydraulikzylinders 22. Während der Speichervolumen-Diagnose wird das Gangstellerventil 38 im Referenz-Gangstellerpfad 32 angesteuert, wobei der Positionssensor 93 die Stellwege Δs des Gangsteller-Hydraulikzylinders 22 erfasst. Diese werden in einem Stellweg-Integrator 95 zu einem Gesamt-Stellweg s_{ges} aufintegriert. Der Gesamt-Stellweg s_{ges} wird in einem Wandler-Baustein 96 in ein Gesamt-Schluckvolumen V_{S} umgerechnet. Zu dem Gesamt-Schluckvolumen V_{S} wird ein während der Speichervolumen-Diagnose abfließendes Hydraulikflüssigkeits-Leckagevolumen V_{L} addiert. Die sich daraus ergebende Hydraulikflüssigkeits-Entnahme V_{E} wird zum oben erwähnten Vergleicher- Baustein 97 geleitet.

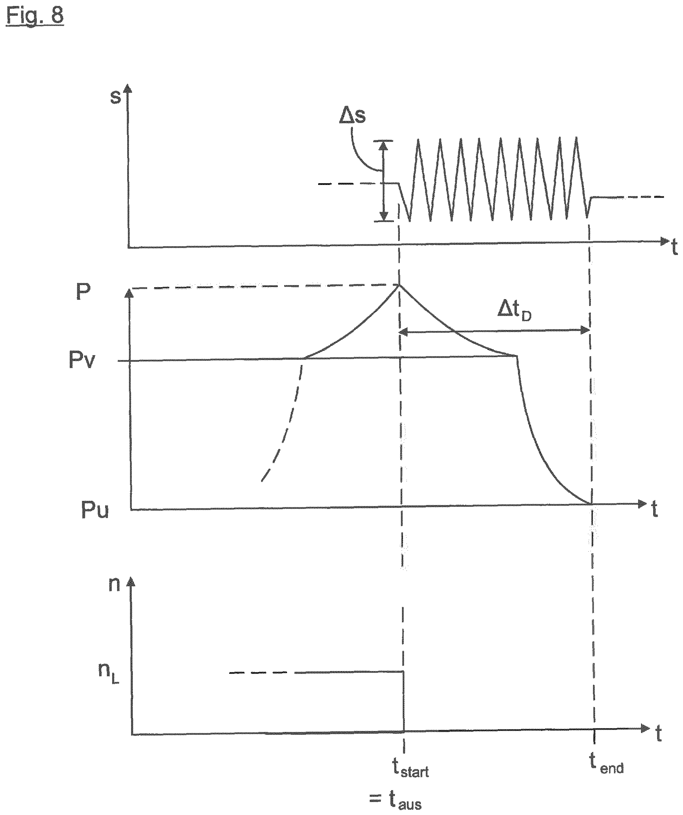

Die Speichervolumen-Diagnose wird wie folgt durchgeführt: Zunächst wird der Druckspeicher 25 in einem Diagnose-Ladebetrieb komplett mit Hydraulikflüssigkeit gefüllt. Der Diagnose-Ladebetrieb ist ein Blindladevorgang, der in einer bestimmten Zeit t erfolgt. Anschließend wird ab einem Start-Zeitpunkt tₛₜₐᵣₜ (stimmt in der Fig. 8 mit dem AusschaltZeitpunkt tₐᵤₛ überein) der Referenz-Hydraulikzylinder 22 in einem Diagnose-Zeitintervall Δt_{D} so lange intermittierend betätigt, bis aufgrund der aus dem Hydrauliksystem genommenen Leckage- und Schluckvolumina V_{L} und Vs ein Umgebungsdruck pu im Hydrauliksystem vorliegt. Der Umgebungsdruck pu wird nicht über einen Drucksensor gemessen, sondern indirekt im Diagnosemodul 79 erkannt, und zwar zu dem End-Zeitpunkt t_{end} (Fig. 8) des Diagnose-Zeitintervall Δt_{D}, zu dem der Positionssensor 93 trotz Durchfluss-Ventilstellung D1, D2 des Referenz-Steuerventils 35 keinen Stellweg Δs mehr erfasst wird.

Während der Druckspeichervolumen-Diagnose ist einer der Kupplungspfade 30, 31 als Referenz-Kupplungspfad sowie der zum Referenz-Hydraulikzylinder 22 führende Referenz-Gangstellerpfad 32 mit dem im Hydrauliksystem vorherrschenden Speicherdruck ps beaufschlagt. Die Hydraulikzylinder 22 der anderen Gangstellerpfade 32 sowie des anderen Kupplungspfads sind dagegen vom Speicherdruck ps entkoppelt. Die Ermittlung des Leckagevolumens V_{L} kann auf der Grundlage der bei den vorangegangenen Diagnosen erfassten Druckgradienten am Kupplungspfad 30 sowie am Referenz-Gangsteller 22 erfolgen (z.B. der Druckgradient ṗ_{K+G} aus der Gangstellerpfad-Diagnose gemäß den Fig. 5 und 6). Der Druckgradient ṗ_{L} wird in der Auswerteeinheit 89 mit dem Diagnose-Zeitintervall Δt_{D} multipliziert. Die so erhaltene Druckdifferenz Δp_{L} wird in einem Wandler 98 in das Leckagevolumen V_{L} umgewandelt.

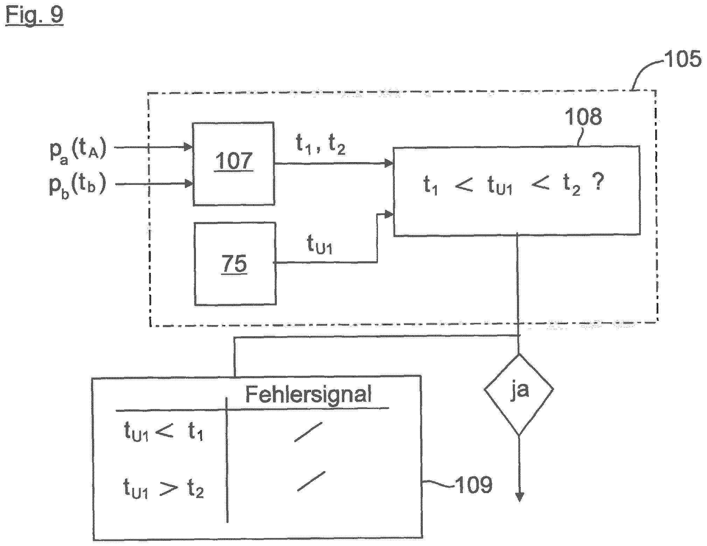

In der Figur 9 sind die für eine Umschaltzeitpunkt-Diagnose am Speicherladeventil 71 erforderlichen Programmbausteine des Diagnosemoduls 79 in einem grob vereinfachten Blockschaltbild gezeigt. Die Umschaltzeitpunkt-Diagnose wird als eine Folgediagnose zeitlich unmittelbar nach der Speichervolumen-Diagnose (Figuren 7 und 8) durchgeführt, und zwar unter der Bedingung, dass in der Speichervolumen-Diagnose ein plausibles Speichervolumen des Druckspeichers 25 erkannt ist.

Wie aus der Figur 9 hervorgeht, weist das Diagnosemodul 79 eine Auswerteinheit 105 auf, mit der im Rahmen der Umschaltzeitpunkt-Diagnose geprüft wird, ob ein erster Umschaltzeitpunkt t_{U1}, zu dem das Speicherladeventil 71 selbsttätig von seiner Ladestellung L in seine Nichtladestellung K schaltet, sowie ein zweiter Umschaltzeitpunkt t_{U2}, zu dem das Speicherladeventil 71 selbsttätig von seiner Nichtladestellung K in seine Ladestellung schaltet, plausibel ist. Hierzu ermittelt die Auswerteeinheit 105, ob zum ersten Umschaltzeitpunkt t_{U1} der Ist-Speicherdruck p_{S}(t) im Bereich des oberen Druckschwellwertes pₘₐₓ liegt. Zudem ermittelt die Auswerteeinheit 105, ob der zum zweiten Umschaltzeitpunkt t_{U2} der Ist-Speicherdruck p_{S}(t) im Bereich des unteren Druckschwellwerts pₘᵢₙ liegt. Zur Erfassung der beiden Umschaltzeitpunkt t_{U1} und t_{U2} wird die Strommesseinrichtung 75 des Elektromotors 57 genutzt. Die Strommesseinrichtung 75 erfasst eine Ist-Stromaufnahme I(t) des Elektromotors 57. Dabei legt die Steuereinheit 39 einen Wechsel-Zeitpunkt von einer hohen Stromaufnahme Iₘₐₓ zu einer niedrigen Stromaufnahme Iₘᵢₙ als ersten Umschaltzeitpunkt t_{U1} fest. Ein Wechsel-Zeitpunkt von der niedrigen Stromaufnahme Iₘᵢₙ zur hohen Stromaufnahme Iₘₐₓ wird als zweiter Umschaltzeitpunkt t_{U2} festgelegt.

Zur Erfassung des Ist-Speicherdruckes ps(t) wird der Kupplungspfad-Drucksensor 34 genutzt. Dessen Messbereich Δpₘₑₛₛ (Figur 11) liegt in der Figur 11 außerhalb, das heißt unterhalb der Druckschwellwerte pₘₐₓ und pₘᵢₙ. Eine unmittelbare Erfassung des Ist-Speicherdruckes ps zu den beiden Umschaltzeitpunkten t_{U1} und t_{U2} ist somit nicht möglich, da der Ist-Speicherdruck zu den beiden Umschaltzeitpunkten außerhalb des Messbereiches Δpₘₑₛₛ liegt.

In der Figur 9 erfolgt die Ermittlung des Ist-Speicherdruckes ps(t) zu den Umschaltzeitpunkten t_{U1} und t_{U2} durch Abschätzung, und zwar mit Hilfe eines Extrapolier-Bausteins 107. Im Extrapolier-Baustein 107 wird auf der Grundlage gemessener Druckwerte pₐ(tₐ) und p_{b}(t_{b}) im SpeicherdruckVerlauf die noch innerhalb des Drucksensor-Messbereiches (Δpₘₑₛₛ) liegen, ein Zeitfenster Δtₛₒₗₗ abgeschätzt. Innerhalb des Zeitfensters Δtₛₒₗₗ liegt bei einwandfreiem Speicherladeventil-Betrieb der erste Umschaltzeitpunkt t_{U1}. Das Zeitfenster Δtₛₒₗₗ wird in der Figur 9 und 11 durch die beiden Zeitpunkte t₁ und t₂ begrenzt. Im nachgeschalteten Vergleicherbaustein 108 wird ermittelt, ob der erste Umschaltzeitpunkt t_{U1} innerhalb oder außerhalb des Zeitfensters Δtₛₒₗₗ liegt. Sofern der erste Umschaltzeitpunkt t_{U1} außerhalb des Zeitfensters Δtₛₒₗₗ liegt, wird ein Fehlerfall erkannt und dieser in dem Fehlerspeicher 109 hinterlegt.

In der Figur 9 ist in den Programmbausteinen lediglich eine Teildiagnose gezeigt, bei der geprüft wird, ob der erste Umschaltzeitpunkt t_{U1} im Zeitfenster Δtₛₒₗₗ liegt oder nicht. In gleicher Weise prüft die Auswerteeinheit 105, ob der zweite Umschaltzeitpunkt t_{U2} innerhalb eines abgeschätzten Zeitfensters liegt oder nicht.

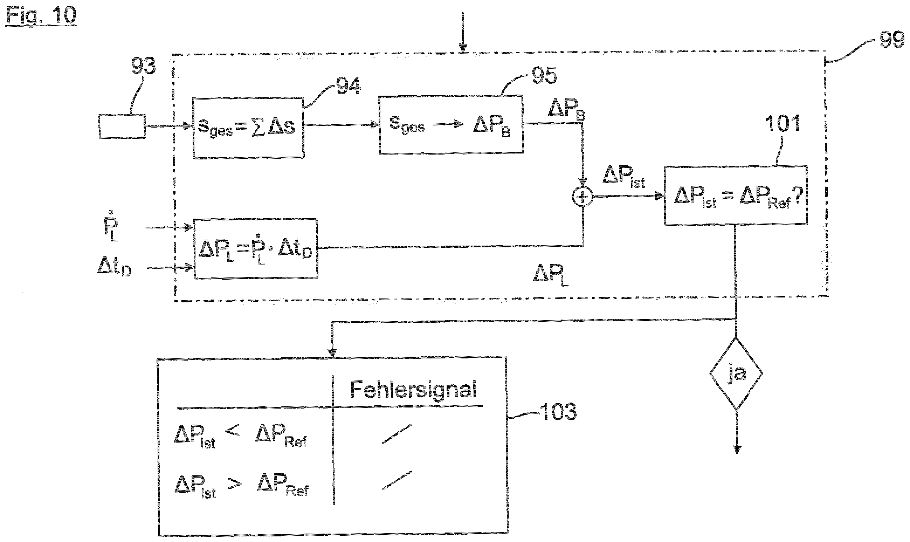

In der Figur 10 sind die für eine Ventilspreizung-Diagnose erforderlichen Programmbausteine des Diagnosemoduls 79 in einem grob vereinfachten Blockschaltbild gezeigt. Die Ventilspreizung-Diagnose wird als eine FolgeDiagnose zeitlich unmittelbar nach der Umschaltzeitpunkt-Diagnose (Figur 9) durchgeführt, und zwar unter der Bedingung, dass in der Umschaltzeitpunkt-Diagnose zumindest ein plausibler Umschaltzeitpunkt t_{U1} des Ladespeicherventils 71 erkannt worden ist.

Das Diagnosemodul 79 weist in der Fig. 10 eine Auswerteeinheit 99 auf, die bei der Ventilspreizung-Diagnose eine Ist-Ventilspreizung Δpᵢₛₜ zwischen dem unteren und dem oberen Druckschwellwert pₘᵢₙ und pₘₐₓ ermittelt. Ein Vergleicherbaustein 101 der Auswerteeinheit 99 vergleicht die Ist-Ventilspreizung Δpᵢₛₜ mit einer Soll-Ventilspreizung Δp_{Ref}. Bei Vorliegen einer signifikanten Abweichung wird ein Fehlerfall erkannt und in dem Fehlerspeicher 103 hinterlegt.

Zur Ermittlung der Ist-Ventilspreizung Δpᵢₛₜ legt die Auswerteeinheit 99 ein Diagnosezeitintervall Δt_{D} fest. Das Diagnosezeitintervall Δt_{D} startet mit dem ersten Umschaltzeitpunkt t_{U1} und endet mit dem folgenden zweiten Umschaltzeitpunkt t_{U2}. Innerhalb des oben definierten Diagnosezeitintervalls Δt_{D} aktiviert das Diagnosemodul 79 einen Referenz-Hydraulikzylinder 22, der gemäß der Figur 11 während des Diagnosezeitintervalls Δt_{D} permanent, d.h. intermittierend, hin- und her verstellt wird. Durch die Betätigung des Referenz-Hydraulikzylinders 22 und durch eine systemimmanente Hydrauliksystem-Leckage erfolgt während des Diagnosezeitintervalls Δt_{D} eine Speicherdruck-Abnahme Δp_{E}, die der Ist-Ventilspreizung Δpᵢₛₜ entspricht.

Die Ermittlung der Speicherdruck-Abnahme Δp_{E}, das heißt der Ist-Ventilspreizung Δpᵢₛₜ, erfolgt anhand der in der Figur 10 gezeigten Programmbausteine: Demzufolge werden vom Positionssensor 93 die Kolben-Stellwege Δs während des Diagnosezeitintervalls Δt_{D} in einem Integrator 94 zu einem Gesamt-Stellweg s_{ges} aufintegriert. Daraus wird in einem Wandler-Baustein 95 die mit der Gangsteller-Betätigung verbundene Druckabnahme Δp_{B} berechnet. Die mit der Gangsteller-Betätigung verbundene Druckabnahme Δp_{B} wird in einem Summierglied mit der leckagebedingten Druckabnahme Δp_{L} addiert, woraus sich die Speicherdruck-Abnahme Δp_{E} während des Diagnosezeitintervalls Δt_{D} ergibt. Die leckagebedingte Druckabnahme Δp_{L} des Referenz-Hydraulikzylinders 22 ist bereits bei vorangegangenen Diagnosen ermittelt worden.

Wie aus der Figur 2a hervorgeht, ist den beiden Kupplungspfaden 30, 31 ein von der elektronischen Steuereinheit 39 ansteuerbares Sicherheitsventil 28 vorgeschaltet. Das Sicherheitsventil 28 kann zwischen einer Schließstellung und einer Durchflussstellung betätigt werden. In der Schließstellung sind die beiden Kupplungspfade 30, 31 vom Druckspeicher 25 druckentkoppelt. In der Durchflussstellung sind die beiden Kupplungspfade 30, 31 mit dem Speicherdruck ps beaufschlagbar. Sofern die Steuereinheit 39 eine Fehlfunktion des Kupplungsventils 35 in zumindest einem der Kupplungspfade 30, 31 erfasst, kann aus Sicherheitsgründen das Sicherheitsventil 28 in seine Schließstellung verstellt werden. Im normalen Fahrbetrieb ist das Sicherheitsventil 28 permanent in seiner Durchflussstellung.

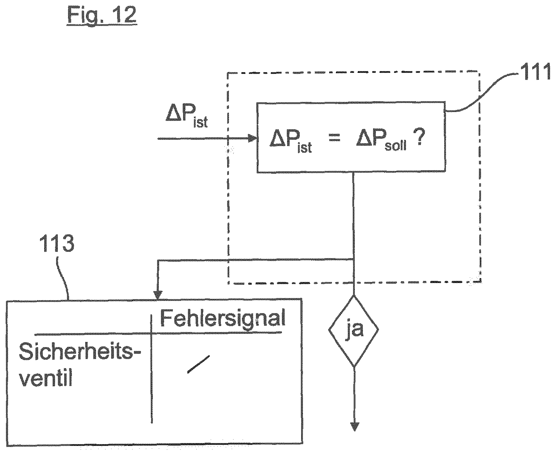

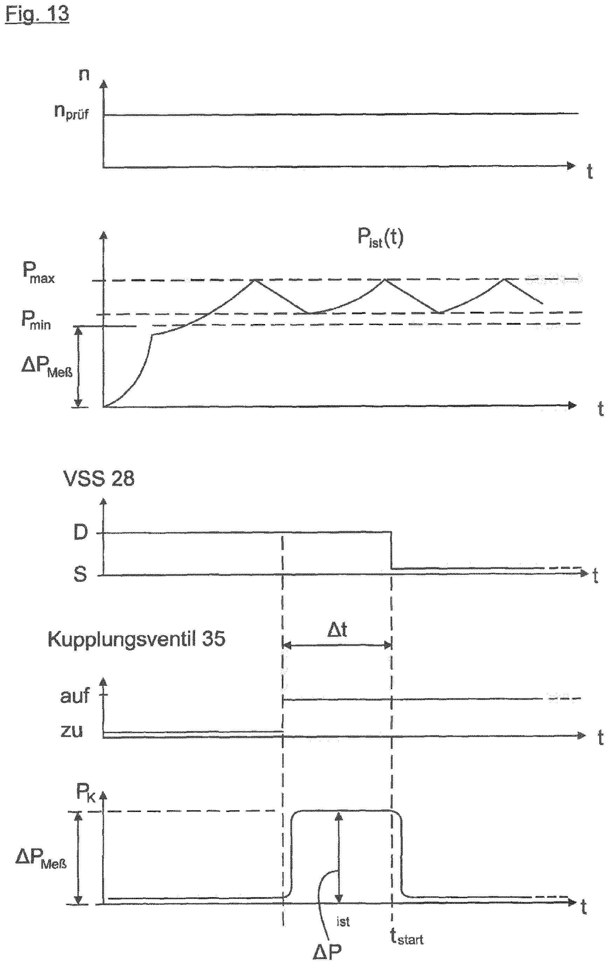

In der Figur 12 sind die für eine Sicherheitsventil-Diagnose erforderlichen Programmbausteine des Diagnosemoduls 79 in einem vereinfachten Blockschaltbild gezeigt. Die Sicherheitsventil-Diagnose kann unabhängig von anderen Diagnoseschritten durchgeführt werden. Bei der Sicherheitsventil-Diagnose wird das Sicherheitsventil 28 zu einem Diagnose-Startzeitpunkt t_{Start} (Figur 13) von der Durchflussstellung in die Schließstellung geschaltet, wodurch sich eine Ist-Druckabnahme Δpᵢₛₜ stromab des Sicherheitsventils 28 einstellt. Das Diagnosemodul 79 weist eine Auswerteeinheit 111 auf, die diese Ist-Druckabnahme Δpᵢₛₜ mit einer Soll-Druckabnahme Δpₛₒₗₗ vergleicht. Bei Vorliegen einer signifikanten Abweichung wird ein Fehlerfall erkannt und in einem Sicherheits-Fehlerspeicher 113 hinterlegt.

Zur Erfassung der Ist-Druckabnahme Δpᵢₛₜ kann der bereits oben erwähnte Kupplungs-Drucksensor 34 genutzt werden.

Nachfolgend wird anhand der Figur 12 und 13 die Durchführung der Sicherheitsventil-Diagnose erläutert: Für eine einwandfreie Meßgenauigkeit wird die Hydraulikpumpe 53 mit einer Konstantdrehzahl n_{prüf} angesteuert, um im Hochdruckkreislauf H einen ausreichend großen Speicherdruck ps zu gewährleisten, der sich gemäß der Figur 13 zwischen den oberen und unteren Druckschwellwerten pₘₐₓ und pₘᵢₙ bewegt. Das Kupplungsventil 35 eines Referenz-Kupplungspfades 30 oder 31 wird um einen Zeitversatz Δt vor dem oben erwähnten Startzeitpunkt t_{Start} in seine Durchflussstellung verstellt, damit der Drucksensor 34 zwischen dem Kupplungsventil 35 und dem Kupplungs-Hydraulikzylinder 23 die Ist-Druckabnahme Δpᵢₛₜ erfassen kann. Während des Zeitversatzes Δt wird vom Drucksensor 34 nicht der tatsächlich am Kupplungs-Hydraulikzylinder 22 anliegende Hydraulikdruck zur Auswerteeinheit 111 (Fig. 12) ausgelesen, sondern vielmehr ein oberer Grenzdruck des Messbereiches Δpₘₑₛₛ.

Zum Diagnose-Startzeitpunkt tstart wird das Sicherheitsventil 28 von seiner Durchflussstellung D in seine Schließstellung S geschaltet. Die daraus resultierende Druckabnahme pᵢₛₜ wird vom Drucksensor 34 erfasst und in der Auswerteeinheit 111 mit der Soll-Druckabnahme verglichen.

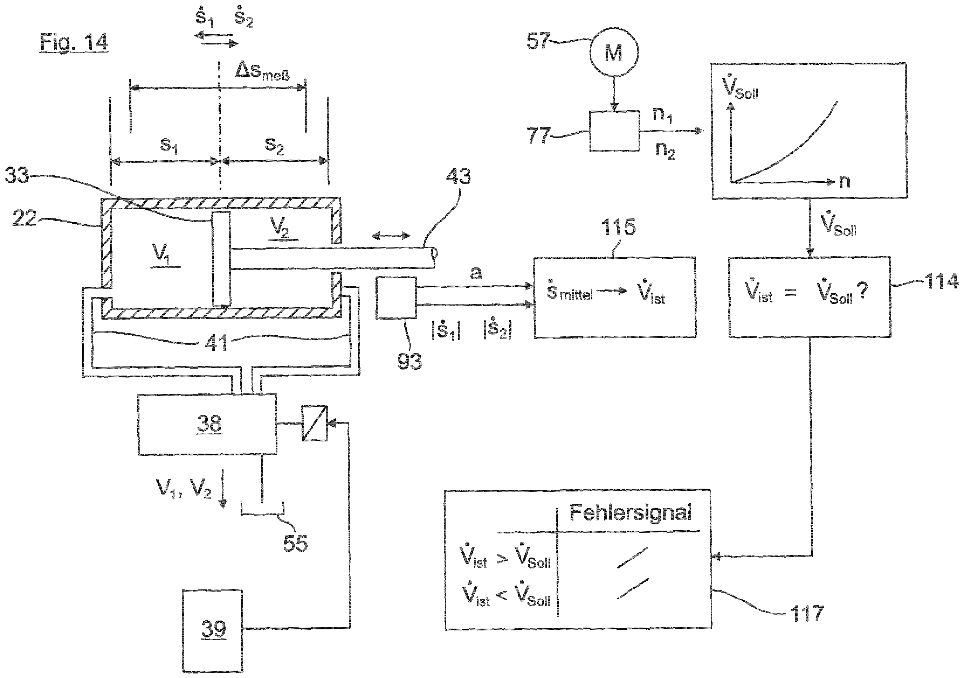

In der Figur 14 sind die für die Fördervolumenstrom-Diagnose erforderlichen Programmbausteine des Diagnosemoduls 79 in einem grob vereinfachten Blockschaltbild gezeigt. Die Fördervolumenstrom-Diagnose wird als eine Folgediagnose zeitlich unmittelbar nach der Speichervolumen-Diagnose (Figuren 7 und 8) durchgeführt, und zwar unter der Bedingung, dass in der Speichervolumen-Diagnose ein plausibles Speichervolumen des Druckspeichers 25 erkannt ist.

Wie aus der Figur 14 hervorgeht, wird für die Diagnose ein Gangsteller-Hydraulikzylinder 22 genutzt, der über den Gangsteller 32 mit dem Drucksensor 25 in Verbindung ist. Dem Gangsteller-Hydraulikzylinder 22 ist ein Gangstellerventil 38 vorgelagert, das von der Steuereinheit 39 ansteuerbar ist, um einen am Gangsteller-Hydraulikzylinder 22 anliegenden Hydraulikdruck einzustellen. Das Gangstellerventil 38 ist zwischen zwei Durchflussstellungen D1, D2 verstellbar, um einen Kolben 33 in gegenläufigen Kolbenhüben über die angedeuteten Stellwege s₁, s₂ sowie mit Kolbengeschwindigkeiten ṡ₁, ṡ₂ im Hydraulik-Stellzylinder 22 zu verlagern. Der Kolben 33 unterteilt in der Figur 14 den Hydraulikzylinder in einen kolbenstangenseitigen Arbeitsraum sowie einen davon abgewandten Arbeitsraum, die beide über Hydraulik-Steuerleitungen 41 mit dem Gangstellerventil 38 in Verbindung sind. Mittels der Kolbenstange 43 des Gangsteller-Hydraulikzylinders 22 kann ein nicht gezeigter Gangsteller G1 betätigt werden. Bei einer solchen Gangsteller-Betätigung steuert die elektronische Steuereinheit 39 das Gangstellerventil 38 in an sich bekannter Weise in eine der Durchflussstellungen D1, D2, um eine Kolbenstange-Bewegung zu erzielen. Der Kolbenhub ist mit einer Hydraulikflüssigkeits-Entnahme V₁, V₂ (Schluckvolumen) aus dem Hydrauliksystem verbunden. Aufgrund der bekannten Innengeometrie des Gangsteller-Hydraulikzylinders 22 ist das jeweilige Schluckvolumen V₁, V₂ bekannt. Zudem ist ein Positionssensor 93 vorgesehen, mit dem die Kolbengeschwindigkeit ṡ₁, ṡ₂ im jeweiligen Kolbenhub erfassbar ist.

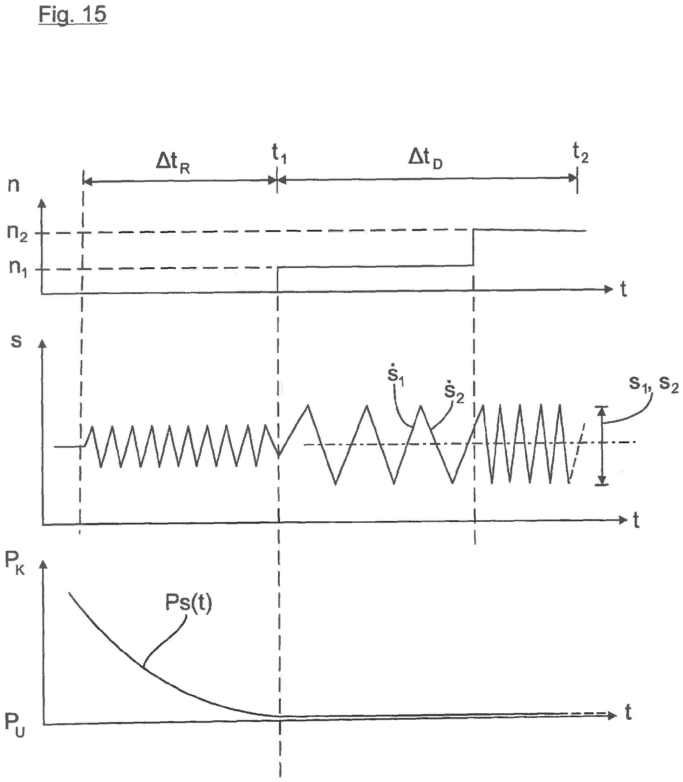

Nachfolgend wird anhand der Figuren 14 und 15 die Fördervolumenstrom-Diagnose beschrieben: So wird zunächst in einem Druckreduzier-Zeitintervall Δt_{R} (Figur 15) zunächst die Hydraulikpumpe 53 deaktiviert und gleichzeitig das Gangstellerventil 38 von der elektronischen Steuereinheit 39 intermittierend angesteuert, wie es in dem mittleren Stellweg-Diagramm der Figur 15 gezeigt ist. Im Druckreduzier-Zeitintervall Δt_{R} wird durch die Ansteuerung vom Gangstellerventil 38 der Gangsteller-Hydraulikzylinder 22 so lange hin- und herbewegt, bis aufgrund von leckagebedingter Hydraulikflüssigkeits-Entnahme und aufgrund betätigungsbedingter Hydraulikflüssigkeits-Entnahme (das heißt Schluckvolumina V₁, V₂) der Speicherdruck ps(t) bis auf den Umgebungsdruck pu reduziert ist. In diesem Zustand ist der Druckspeicher 25 vollständig entleert. Unmittelbar anschließend erfolgt der Start (tₛₜₐᵣₜ) eines Diagnosezeitintervalls Δt_{D}. Im Diagnosezeitintervall Δt_{D} erfolgt ein Ladebetrieb der Hydraulikpumpe 53, bei der diese mit unterschiedlichen Prüf-Drehzahlen n₁ und n₂ angesteuert werden. Gleichzeitig wird das Gangstellerventil 38 zwischen seinen Durchflussstellungen D1, D2 intermittierend verstellt. Dies führt dazu, dass sich der Kolben 33 im Gangsteller-Hydraulikzylinder 22 in gegenläufigen Kolbenhüben über Kolbenstellwege s₁, s₂ sowie mit Kolbengeschwindigkeiten ṡ₁, ṡ₂ im Gangsteller-Hydraulikzylinder 22 hin- und herverlagert.

Der Positionssensor 93 erfasst sowohl die einzelnen Stellwege s₁, s₂ je Kolbenhub sowie die Kolbengeschwindigkeiten ṡ₁, ṡ₂ je Kolbenhub. Zudem wird die Anzahl a (Fig. 14) von Kolbenhüben während des Diagnosezeitintervalls Δt_{D} erfasst. Diese Daten werden zum Signaleingang eines Wandler-Bausteins 115 geleitet, in dem eine mittlere Kolbengeschwindigkeit ṡₘᵢₜₜₑₗ aus der Anzahl a von erfassten Kolbenhüben berechnet wird. Aus der mittleren Kolbengeschwindigkeit ṡₘᵢₜₜₑₗ wird im Wandler-Baustein 115 ein Ist-Fördervolumenstrom Vᵢₛₜ berechnet. Der Ist-Fördervolumenstrom Vᵢₛₜ wird in einer signaltechnisch nachgeschalteten Auswerteeinheit 113 mit einem Soll-Fördervolumenstrom Vₛₒₗₗ verglichen, und zwar unter Berücksichtigungen der jeweiligen Prüf-Drehzahl n₁ und n₂ während des Diagnosezeitintervalls Δt_{D}. Ergibt sich in der Auswerteeinheit 113 eine signifikante Abweichung, so wird ein Fehlerfall erkannt, der in dem Fehlerspeicher 117 hinterlegt wird.

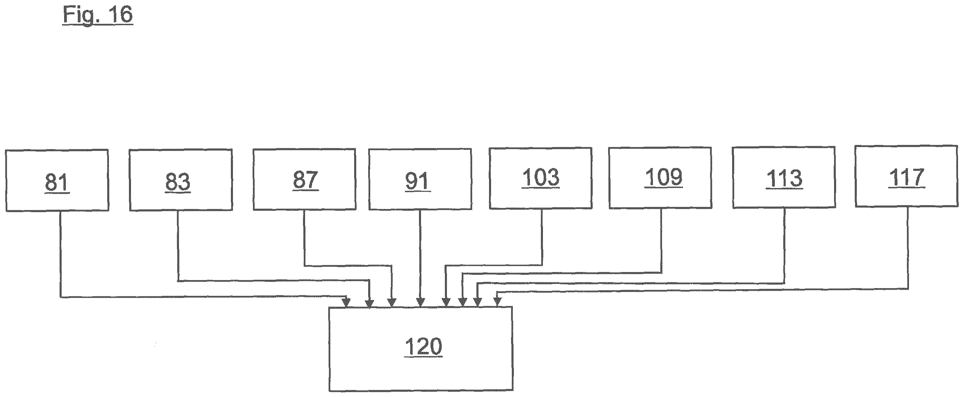

Wie aus der Fig. 16 hervorgeht, sind sämtliche Fehlerspeicher 81, 83, 87, 91, 103, 109, 117 in Signalverbindung mit einer Analyseeinheit 120, in die die in den Fehlerspeichern generierten Fehlersignale auslesbar sind. In der Analyseeinheit 120 ist eine Bewertungsmatrix hinterlegt, in der die Fehlersignale aus den Fehlerspeichern 81, 83, 87, 91, 103, 109, 117 zusammengeführt werden.

Im Hinblick auf eine umfassende Hydrauliksystem-Diagnose bewertet die Analyseeinheit 120 anhand der Bewertungsmatrix sämtliche Fehlersignale in Kombination. In der Analyseeinheit 120 erfolgt somit final eine Gegenüberstellung von Fehlersignalen mit nicht beanstandeten, d.h. fehlerfreien Funktionsdiagnosen, wodurch eine qualifizierte Bewertung der in dem Hydrauliksystem verbauten Komponenten ermöglicht ist. Die Bewertung ist ohne eine Zerlegung des Hydrauliksystems sowie ohne externe Prüfanlagen/Messtechnik ermöglicht. Auf diese Weise wird eine Verkürzung von Reparatur- und Instandsetzungszeiten, eine sichere Detektion defekter Bauteile, eine Reduzierung von Wiederholreparaturen, eine Einsparung von Analyse-Prüfstandkapazitäten durch Prüfung im verbauten Zustand (im Fahrzeug) ohne Zerlegungsaufwand möglich.

## Patentansprüche

1. Hydrauliksystem für ein Automatikgetriebe, insbesondere ein Doppelkupplungsgetriebe, eines Kraftfahrzeugs, mit einem Hochdruckkreislauf (H), in dem ein Druckspeicher (25), zumindest eine Kupplung (K1, K2) sowie Gangsteller (G1 bis G4) und zumindest eine Hydraulikpumpe (53) angeordnet ist, die über eine elektronische Steuereinheit (39) ansteuerbar sind, wobei der Druckspeicher (25) über zumindest einen Hydraulikpfad (32) mit einem Hydraulik-Stellzylinder (22) verbindbar ist, dem ein von der Steuereinheit (39) ansteuerbares Steuerventil (38) vorgelagert ist, mit dem ein am Hydraulik-Stellzylinder (22) anliegender Hydraulikdruck einstellbar ist, welches Steuerventil (38) zwischen zwei Durchflussstellungen (D1, D2) verstellbar ist, um einen Kolben (33) in gegenläufigen Kolbenhüben über gegenläufige Kolbenstellwege (s₁, s₂) sowie Kolbengeschwindigkeiten (ṡ₁, ṡ₂) im Hydraulik-Stellzylinder (22) zu verlagern, wobei jeder Kolbenhub mit einer Hydraulikflüssigkeits-Entnahme (V₁, V₂) aus dem Hydrauliksystem verbunden ist, **dadurch gekennzeichnet, dass** die Steuereinheit (39) ein Diagnosemodul (79) aufweist, mit dem eine Fördervolumenstrom-Diagnose durchgeführt wird, bei der eine Auswerteeinheit (114) einen von der Hydraulikpumpe (53) geförderten Ist-Fördervolumenstrom (Vᵢₛₜ) ermittelt und mit einem Soll- Fördervolumenstrom (Vₛₒₗₗ) vergleicht und bei einer signifikanten Abweichung einen Fehlerfall erkennt, der in einem Fördervolumenstrom-Fehlerspeicher (117) hinterlegbar ist.

2. Hydrauliksystem nach Anspruch 1, **dadurch gekennzeichnet, dass** das Diagnosemodul (79) zur Ermittlung des Ist-Fördervolumenstroms (Vᵢₛₜ) in einem Diagnosezeitintervall (Δt_{D}) die Hydraulikpumpe (53) in einem Ladebetrieb mit zumindest einer Drehzahl (n₁, n₂) und das Steuerventil (38) in eine der Durchflussstellungen (D1, D2) ansteuert, und dass eine Auswerteeinheit (114) auf der Grundlage der sich im Ladebetrieb einstellenden Kolbengeschwindigkeit (ṡ₁, ṡ₂) das Ist-Fördervolumenstrom (Vᵢₛₜ) ermittelt und mit dem Soll-Fördervolumenstrom (Vₛₒₗₗ) vergleicht.

3. Hydrauliksystem nach Anspruch 2, **dadurch gekennzeichnet, dass** der für die Fördervolumenstrom-Diagnose genutzte Hydraulik-Stellzylinder (22) ein Gangsteller-Hydraulikzylinder ist, dem als Steuerventil (38) ein Gangstellerventil vorgelagert ist.

4. Hydrauliksystem nach Anspruch 1, 2 oder 3, **dadurch gekennzeichnet, dass** innerhalb des Diagnosezeitintervalls (Δt_{D}) der im Hochdruckkreislauf (H) im Hydraulikpfad (32) vorherrschende Speicherdruck (pₛ) konstant gehalten wird, um zu gewährleiten, dass im Pumpen-Ladebetrieb die Pumpen-Förderleistung nicht zusätzlich für einen Druck-Aufbau des Speicherdrucks (pₛ) im Hochdruckkreislauf (H) aufgebraucht wird.

5. Hydrauliksystem nach Anspruch 4, **dadurch gekennzeichnet, dass** der Speicherdruck (pₛ) während des Diagnosezeitintervalls (Δt_{D}) bei Umgebungsdruck (p_{U}) gehalten wird, das heißt der Hochdruckkreislauf (H) drucklos ist.

6. Hydrauliksystem nach einem der vorhergehenden Ansprüche, **dadurch gekennzeichnet, dass** der Druckspeicher (25) über zumindest einen Kupplungspfad (30, 31) mit einem Kupplungs-Hydraulikzylinder (23) der Kupplung (K1, K2) verbindbar ist, mit dem ein am Kupplungs-Hydraulikzylinder (23) anliegender Hydraulikdruck einstellbar ist, und dass der Steuereinheit (39) ein Drucksensor (34) zugeordnet ist, mit dem der am Kupplungs-Hydraulikzylinder (23) anliegende Hydraulikdruck erfassbar ist.

7. Hydrauliksystem nach Anspruch 6, **dadurch gekennzeichnet, dass** der im Kupplungspfad (30, 31) angeordnete Drucksensor (34) während der Fördervolumenstrom-Diagnose zur Erfassung des Ist-Speicherdrucks (p_{S}) genutzt wird.

8. Hydrauliksystem nach einem der vorhergehende Ansprüche, **dadurch gekennzeichnet, dass** vor dem Start (tₛₜₐᵣₜ) des Diagnosezeitintervalls (Δt_{D}) der Druckspeicher (p_{S}) komplett entleert wird, wodurch der Ist-Speicherdruck (p_{S}) auf den Umgebungsdruck (p_{U}) reduziert wird.

9. Hydrauliksystem nach Anspruch 8, **dadurch gekennzeichnet, dass** die Reduzierung des Ist-Speicherdrucks (p_{S}) auf den Umgebungsdruck (p_{U}) in einem Druckreduzier-Zeitintervall (Δt_{R}) erfolgt, in dem die Hydraulikpumpe (53) deaktiviert ist, und der Hydraulik-Stellzylinder (22) solange durch Ansteuerung seines Steuerventils (35) betätigt wird, bis aufgrund von leckagebedingter Hydraulikflüssigkeits-Entnahme und aufgrund betätigungsbedingter Hydraulikflüssigkeits-Entnahme (V₁, V₂) der Umgebungsdruck (p_{U}) erreicht ist.

10. Hydrauliksystem nach Anspruch 9, **dadurch gekennzeichnet, dass** das Vorliegen von Umgebungsdruck (p_{U}) im Hochdruckkreislauf (H) mittels des Positionssensors (93) ermittelt wird, und zwar für den Fall, dass der Positionssensor (93) trotz Ansteuerung des Steuerventils (35) keinen Kolbenhubweg (s₁, s₂) erfasst.

11. Hydrauliksystem nach einem der vorhergehenden Ansprüche, **dadurch gekennzeichnet, dass** zur Vermeidung von Messungenauigkeiten während des Diagnosezeitintervalls (Δt_{D}) die Kolbengeschwindigkeiten (ṡ₁, ṡ₂) einer Vielzahl von Kolbenhüben erfasst werden und die Auswerteeinheit (113) daraus einen Kolbengeschwindigkeits-Mittelwert (ṡₘᵢₜₜₑₗ) bildet, aus dem der Ist-Fördervolumenstrom (Vᵢₛₜ) berechnet wird.

## Claims

1. Hydraulic system for an automatic transmission, in particular a dual clutch transmission, of a motor vehicle, having a high pressure circuit (H), in which a pressure accumulator (25), at least one clutch (K1, K2) as well gear selectors (G1 to G4) and at least one hydraulic pump (53) are arranged, which can be controlled by an electronic control unit (39), wherein the pressure accumulator (25) can be connected to a hydraulic positioning cylinder (22) via at least one hydraulic path (32), wherein a control valve (38) that can be controlled by the control unit (39) is arranged upstream thereof, with which a hydraulic pressure at the hydraulic positioning cylinder (22) can be adjusted, and which control valve (38) can be moved between two through-flow positions (D1, D2), in order to move a piston (33) in opposing piston strokes via opposing piston travel paths (S₁, S₂) as well as piston speeds (Ṡ₁, Ṡ₂) in the hydraulic positioning cylinder (22), wherein each piston stroke is connected to a hydraulic fluid outlet (V₁, V₂) out of the hydraulic system, **characterised in that** the control unit (39) has a diagnosis module (79), with which a diagnosis of the conveyed volume flow is carried out, wherein an evaluation unit (114) determines an actual conveyed volume flow (Vᵢₛₜ) conveyed by the hydraulic pump (53) and compares it with a target conveyed volume flow (Vₛₒₗₗ) and, in the event of a significant deviation, detects an error that can be stored in a conveyed volume flow error memory (117).

2. Hydraulic system according to claim 1, **characterised in that** the diagnosis module (79) for determining the actual conveyed volume flow (Vᵢₛₜ) controls the hydraulic pump (53) during a diagnosis period (Δt_{D}) in a charging mode with at least one rotational speed (n₁, n₂) and the control valve (38) in one of the through-flow positions (D1, D2), and that an evaluation unit (114) determines the actual conveyed volume flow (Vᵢₛₜ) on the basis of the piston speed (Ṡ₁, Ṡ₂) arising in charging mode and compares it with the target conveyed volume flow (Vₛₒₗₗ).

3. Hydraulic system according to claim 2, **characterised in that** the hydraulic positioning cylinder (22) used for the conveyed volume flow diagnosis is a gear selector hydraulic cylinder, which is arranged upstream of a gear selector valve as a control valve (38).

4. Hydraulic system according to claim 1, 2 or 3, **characterised in that**, within the diagnosis period (Δt_{D}), the prevailing accumulator pressure (pₛ) within the high pressure circuit (H) in the hydraulic path (32) is maintained constant, in order to ensure that, in pump charging mode, the pump flow rate is not additionally expended for a pressure build-up of the accumulator pressure (pₛ) within the high pressure circuit (H).

5. Hydraulic system according to claim 4, **characterised in that** the accumulator pressure (pₛ) during the diagnosis period (Δt_{D}) is maintained at ambient pressure (pᵤ), which means that the high pressure circuit (H) is unpressurised.

6. Hydraulic system according to any of the preceding claims, **characterised in that** the pressure accumulator (25) can be connected to a clutch hydraulic cylinder (23) of the clutch (K1, K2) via at least one clutch path (30, 31), with which a hydraulic pressure at the clutch hydraulic cylinder (23) can be adjusted, and that the control unit (39) is assigned a pressure sensor (34), with which the hydraulic pressure at the clutch hydraulic cylinder (23) can be detected.

7. Hydraulic system according to claim 6, **characterised in that** the pressure sensor (34) arranged in the clutch path (30, 31) is used to detect the actual accumulator pressure (pₛ) during diagnosis of the conveyed volume flow.

8. Hydraulic system according to any of the preceding claims, **characterised in that**, before the start (tₛₜₐᵣₜ) of the diagnosis period (Δt_{D}), the pressure accumulator (ps) is completely emptied, whereby the actual accumulator pressure (pₛ) is reduced to ambient pressure (pᵤ).

9. Hydraulic system according to claim 8, **characterised in that** the reduction of the actual accumulator pressure (pₛ) to ambient pressure (pᵤ) takes place within a pressure reducing period (Δt_{R}), in which the hydraulic pump (53) is deactivated, and the hydraulic positioning cylinder (22) is operated by controlling its control valve (35) until ambient pressure (pᵤ) is reached, by virtue of a leakage-based hydraulic fluid outlet and by virtue of an operation-based hydraulic fluid outlet (V1, V2).

10. Hydraulic system according to claim 9, **characterised in that** the presence of ambient pressure (pᵤ) within the high pressure circuit (H) is determined by means of the position sensor (93), and specifically in the event that the position sensor (93) does not detect a piston travel path (S₁, S₂) despite control of the control valve (35).

11. Hydraulic system according to any of the preceding claims, **characterised in that**, in order to prevent measurement inaccuracies during the diagnosis period (Δt_{D}), the piston speeds (Ṡ₁, Ṡ₂) for a plurality of piston strokes are detected and the evaluation unit (113) establishes a mean piston speed (Ṡₘₑₐₙ) on this basis, from which the actual conveyed volume flow (Vᵢₛₜ) is calculated.

## Revendications

1. Système hydraulique pour une transmission automatique, en particulier une transmission à double embrayage, d'un véhicule automobile, avec un circuit à haute pression (H), dans lequel un accumulateur de pression (25), au moins un embrayage (K1, K2) ainsi qu'un sélecteur de vitesse (G1 à G4) et au moins une pompe hydraulique (53) sont agencés, lesquels peuvent être commandés par le biais d'une unité de commande (39) électronique, dans lequel l'accumulateur de pression (25) peut être relié par le biais d'au moins un trajet hydraulique (32) à un cylindre de réglage hydraulique (22), en amont duquel une soupape de commande (38) pouvant être commandée par l'unité de commande (39) est logée, avec laquelle soupape de commande une pression hydraulique appliquée au cylindre de réglage hydraulique (22) peut être réglée, laquelle soupape de commande (38) est réglable entre deux positions de circulation (D1, D2) afin de déplacer un piston (33) dans des courses de piston contraires par l'intermédiaire de voies de réglage de piston (s₁, s₂) contraires ainsi que des vitesses de piston (ṡ₁, ṡ₂) dans le cylindre de réglage hydraulique (22), dans lequel chaque course de piston est reliée à un prélèvement de liquide hydraulique (V₁, V₂) du système hydraulique, **caractérisé en ce que** l'unité de commande (39) présente un module de diagnostic (79), avec lequel un diagnostic de débit volumique de refoulement est réalisé, pour lequel une unité d'évaluation (114) détermine un débit volumique de refoulement réel (Vᵢₛₜ) refoulé par la pompe hydraulique (53) et le compare avec un débit volumique de refoulement de consigne (Vₛₒₗₗ) et détecte en cas d'écart significatif un cas de dysfonctionnement qui peut être enregistré dans une mémoire d'erreurs de débit volumique de refoulement (117).

2. Système hydraulique selon la revendication 1, **caractérisé en ce que** le module de diagnostic (79) pour la détermination du débit volumique de refoulement réel (Vᵢₛₜ) dans un intervalle de diagnostic (Δt_{D}) commande la pompe hydraulique (53) dans un mode de charge avec au moins une vitesse de rotation (n₁, n₂) et la soupape de commande (38) dans une des positions de circulation (D1, D2), et qu'une unité d'évaluation (114) détermine sur la base de la vitesse de piston (ṡ₁, ṡ₂) se réglant dans le mode de charge le débit volumique de refoulement réel (Vᵢₛₜ) et le compare avec le débit volumique de refoulement de consigne (Vₛₒₗₗ).

3. Système hydraulique selon la revendication 2, **caractérisé en ce que** le cylindre de réglage hydraulique (22) utilisé pour le diagnostic de débit volumique de refoulement est un cylindre hydraulique de sélecteur de vitesse, en amont duquel une soupape de sélecteur de vitesse est logée comme soupape de commande (38).

4. Système hydraulique selon la revendication 1, 2 ou 3, **caractérisé en ce que** dans l'intervalle de diagnostic (Δt_{D}) la pression d'accumulateur (pₛ) régnant dans le circuit à haute pression (H) dans le trajet hydraulique (32) est maintenue constante afin de garantir que dans le mode de charge de pompe la puissance de refoulement de pompe n'est pas consommée en outre pour un établissement de pression de la pression d'accumulateur (pₛ) dans le circuit à haute pression (H).

5. Système hydraulique selon la revendication 4, **caractérisé en ce que** la pression d'accumulateur (pₛ) est maintenue pendant l'intervalle de diagnostic (Δt_{D}) pour la pression environnementale (pᵤ), cela signifie que le circuit à haute pression (H) est exempt de pression.

6. Système hydraulique selon l'une des revendications précédentes, **caractérisé en ce que** l'accumulateur de pression (25) peut être relié par l'intermédiaire d'au moins un trajet d'embrayage (30, 31) à un cylindre hydraulique d'embrayage (23) de l'embrayage (K1, K2), avec lequel une pression hydraulique appliquée au cylindre hydraulique d'embrayage (23) peut être réglée, et qu'un capteur de pression (34) est associé à l'unité de commande (39), avec lequel la pression hydraulique appliquée au cylindre hydraulique d'embrayage (23) peut être détectée.

7. Système hydraulique selon la revendication 6, **caractérisé en ce que** le capteur de pression (34) agencé dans le trajet d'embrayage (30, 31) est utilisé pendant le diagnostic de débit volumique de refoulement pour la détection de la pression d'accumulateur réelle (pₛ).

8. Système hydraulique selon l'une des revendications précédentes, **caractérisé en ce que** l'accumulateur de pression (pₛ) est complètement vidé avant le démarrage (tₛₜₐᵣₜ) de l'intervalle de diagnostic (Δt_{D}), par quoi la pression d'accumulateur réelle (pₛ) est réduite à la pression environnementale (pᵤ).

9. Système hydraulique selon la revendication 8, **caractérisé en ce que** la réduction de la pression d'accumulateur réelle (pₛ) à la pression environnementale (pᵤ) est effectuée dans un intervalle de réduction de pression (Δt_{R}), dans lequel la pompe hydraulique (53) est désactivée, et le cylindre de réglage hydraulique (22) est actionné par commande de sa soupape de commande (35) jusqu'à ce que la pression environnementale (pᵤ) soit atteinte en raison du prélèvement de liquide hydraulique dû aux fuites et en raison du prélèvement de liquide hydraulique (V₁, V₂) dû à l'actionnement.

10. Système hydraulique selon la revendication 9, **caractérisé en ce que** la présence de pression environnementale (pᵤ) dans le circuit à haute pression (H) est déterminée au moyen du capteur de position (93), et ce au cas où le capteur de position (93) ne détecte aucune course de levage de piston (s₁, s₂) en dépit de la commande de la soupape de commande (35).

11. Système hydraulique selon l'une des revendications précédentes, **caractérisé en ce que** les vitesses de piston (ṡ₁, ṡ₂) d'une pluralité de courses de piston sont détectées pour éviter des imprécisions de mesure pendant l'intervalle de diagnostic (Δt_{D}) et l'unité d'évaluation (113) forme à partir de celles-ci une valeur médiane de vitesse de piston (ṡₘᵢₜₜₑₗ), à partir de laquelle le débit volumique de refoulement réel (Vᵢₛₜ) est calculé.
